(19) Europäisches Patentamt
European Patent Office
Office européen des brevets

(11) **EP 4 330 722 B1**

(12) **FASCICULE DE BREVET EUROPEEN**

(45) Date de publication et mention
de la délivrance du brevet:
**23.10.2024 Bulletin 2024/43**

(21) Numéro de dépôt: **23709219.2**

(22) Date de dépôt: **08.03.2023**

(51) Classification Internationale des Brevets (IPC):
*G01S 13/00* (2006.01)     *G01S 13/06* (2006.01)
*G01S 13/58* (2006.01)     *G01S 13/87* (2006.01)
*G01S 13/91* (2006.01)     *G01S 13/95* (2006.01)
*G01S 7/292* (2006.01)     *G01S 7/288* (2006.01)
*G01S 13/30* (2006.01)     *G01S 13/26* (2006.01)
*G01S 13/10* (2006.01)     *G01S 13/22* (2006.01)
*G01S 13/53* (2006.01)     *G01S 13/02* (2006.01)

(52) Classification Coopérative des Brevets (CPC):
**G01S 13/003; G01S 7/2883; G01S 7/2923;
G01S 7/2926; G01S 13/06; G01S 13/106;
G01S 13/225; G01S 13/26; G01S 13/30;
G01S 13/53; G01S 13/582; G01S 13/878;
G01S 13/91; G01S 13/955;** G01S 2013/0245

(86) Numéro de dépôt international:
**PCT/EP2023/055912**

(87) Numéro de publication internationale:
**WO 2023/174774 (21.09.2023 Gazette 2023/38)**

(54) **SYSTÈME RADAR ET PROCÉDÉ ASSOCIÉ POUR OPTIMISER L'ÉLIMINATION DE FOUILLIS RADAR**

RADARSYSTEM UND ZUGEHÖRIGES VERFAHREN ZUR OPTIMIERUNG DER BESEITIGUNG VON RADARSTÖRUNGEN

RADAR SYSTEM AND ASSOCIATED METHOD FOR OPTIMISING THE ELIMINATION OF RADAR CLUTTER

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **17.03.2022 FR 2202279**

(43) Date de publication de la demande:
**06.03.2024 Bulletin 2024/10**

(73) Titulaire: **Airbus Defence and Space SAS
31402 Toulouse Cedex 4 (FR)**

(72) Inventeur: **JEANNIN, Nicolas
31402 Toulouse Cedex 4 (FR)**

(74) Mandataire: **Ipside
6, Impasse Michel Labrousse
31100 Toulouse (FR)**

(56) Documents cités:
**FR-A1- 3 026 194     FR-A1- 3 113 951
US-A1- 2012 249 364**

**Description**

**Domaine de l'invention**

La présente invention appartient au domaine des systèmes radars. L'invention concerne notamment un système radar et un procédé de fonctionnement d'un système radar pour optimiser l'élimination de fouillis radar. L'invention trouve une application particulièrement avantageuse pour un système radar au moins partiellement embarqué dans un satellite et pour lequel le dispositif émetteur et/ou le dispositif récepteur est orienté vers la Terre.

**Etat de la technique**

Pour un système radar au moins partiellement embarqué dans un satellite et pour lequel le dispositif émetteur et/ou le dispositif récepteur est orienté vers la Terre, la présence d'un bruit de fond issu des échos parasites retournés par le sol peut rendre la détection d'une cible particulièrement difficile. Ce bruit de fond est généralement appelé « fouillis radar ».

Cela peut être le cas notamment pour un système radar bi-statique dédié à la surveillance aérienne et comprenant un dispositif émetteur embarqué dans un satellite en orbite autour de la Terre et un dispositif récepteur embarqué dans un avion. Cela peut aussi être le cas, selon un autre exemple, pour un système radar mono-statique dédié à la surveillance météorologique et pour lequel à la fois le dispositif émetteur et le dispositif récepteur sont embarqués dans un satellite en orbite autour de la Terre.

Dans le cas d'un système radar dédié à la surveillance aérienne, les cibles d'intérêt sont des aéronefs. Dans le cas d'un système radar mono-statique dédié à la surveillance météorologique, les cibles d'intérêt sont les hydrométéores (ensemble de gouttes d'eau ou de particules de glace en suspension dans l'atmosphère : pluie, bruine, neige, grêle, brouillard, nuage, etc.). Le sol terrestre forme une scène d'arrière-plan illuminée par le dispositif émetteur du système radar et diffusant en retour une quantité d'énergie généralement beaucoup plus élevée que l'énergie retournée par les cibles d'intérêt. Cette énergie réfléchie par le sol forme un fouillis radar, et les cibles d'intérêt doivent être distinguées du fouillis.

La discrimination en distance est généralement effectuée à l'aide d'un filtrage adapté à la forme d'onde émise. Autrement dit, une cible peut être distinguée du bruit de fond en séparant des pics d'énergie distincts dans le temps après filtrage adapté. Le filtrage adapté revient à corréler le signal reçu avec le signal émis.

La discrimination dans le domaine de la fréquence et/ou de l'angle de propagation est généralement effectuée à l'aide d'un filtrage Doppler et/ou d'un traitement adaptatif spatio-temporel (STAP, acronyme anglais pour « Space Time Adaptive Processing »).

Ces opérations visent à maximiser le rapport signal sur bruit plus fouillis (SNCR, acronyme anglais pour « Signal-to-Noise-plus-Clutter Ratio »).

Pour un radar mono-statique, l'utilisation d'une forme d'onde pulsée avec des périodes d'émission courtes et régulières est préférable pour obtenir une longue distance de détection car l'émission et la réception simultanées induisent des auto-interférences qui empêchent la bonne exploitation du signal reçu. C'est pourquoi, en général, les périodes d'émission et de réception sont distinctes. Il existe alors une zone aveugle en réception correspondant à la période pendant laquelle le radar émet un signal et n'est pas capable de recevoir un signal réfléchi. Pour limiter la zone aveugle, il est donc préférable de limiter la durée d'une impulsion.

Toutefois, d'après l'équation radar, le rapport signal sur bruit (SNR, acronyme anglais pour « Signal-to-Noise Ratio ») dépend de la puissance moyenne émise. Or, la puissance moyenne émise est proportionnelle à la puissance crête émise pour une impulsion et au rapport cyclique d'émission du système radar (le rapport cyclique d'émission du système radar correspond au rapport entre la durée d'une impulsion et la période de répétition des impulsions). Pour augmenter la distance de détection d'une cible, il convient donc d'augmenter la puissance crête ou d'augmenter le rapport cyclique. Pour augmenter le rapport cyclique, il est envisageable d'augmenter la durée des impulsions (mais dans ce cas on augmente la zone aveugle) ou de diminuer la période de répétition (mais dans ce cas cela diminue la distance maximale non ambiguë du système radar).

Pour obtenir un niveau de puissance moyenne permettant d'atteindre un certain niveau de SNR pour une cible à une distance donnée, la puissance crête doit être égale à la puissance moyenne divisée par le rapport cyclique du système radar. Ainsi, plus le rapport cyclique est faible, et plus la puissance crête requise est grande pour atteindre un certain niveau de SNR pour une cible à une distance donnée.

Il est parfois difficile d'obtenir une puissance crête élevée, en particulier dans le cadre d'une émission spatiale (le matériel d'amplification requis pour obtenir une puissance crête élevée n'est généralement pas adapté à la charge utile du satellite qui embarque le dispositif émetteur).

Pour un radar bi-statique, il peut être intéressant d'utiliser une émission continue afin de réduire les contraintes relatives à la puissance crête requise pour atteindre un niveau donné de puissance moyenne émise. Ceci est possible grâce à la séparation physique entre le dispositif émetteur et le dispositif récepteur du système radar, ce qui réduit de manière significative le problème de l'auto-interférence.

Toutefois, lorsqu'une forme d'onde continue est utilisée, les résultats de corrélation obtenus par le filtrage adapté présentent des lobes secondaires relativement importants. L'énergie résiduelle des lobes secondaires diminue en moyenne proportionnellement au produit entre le temps d'intégration du filtrage et la bande passante de la forme d'onde.

En présence d'un fouillis radar dont l'énergie est supérieure de plusieurs ordres de grandeur à celle des cibles d'intérêt, ces lobes secondaires peuvent empêcher la détection d'une cible d'intérêt. En effet, dans un tel cas le filtrage Doppler conventionnellement utilisé pour éliminer le fouillis peut ne pas être suffisamment performant car l'énergie provient d'une grande variété de vitesses et de directions pour une cellule de distance donnée.

La demande de brevet FR3026194A1 divulgue la détection d'une cible avec un radar en utilisant une forme d'onde impulsionnelle comportant plusieurs sous-impulsions jointives ayant chacune une porteuse propre.

La demande de brevet FR3113951FR divulgue un dispositif émetteur d'un système radar bi-statique ou multi-statique pour la surveillance aérienne. Le dispositif émetteur est destiné à être embarqué dans un satellite en orbite autour de la Terre.

La demande de brevet US2012/249364A1 divulgue un procédé de fonctionnement d'un radar qui consiste à utiliser plusieurs canaux fréquentiels simultanément. Dans la bande totale émise par le radar, plusieurs impulsions sont générées, chacune dans un canal fréquentiel séparé des autres. A la réception, les impulsions sont traitées simultanément dans des canaux fréquentiels correspondants.

## Exposé de l'invention

La présente invention a pour objectif de remédier à tout ou partie des inconvénients de l'art antérieur, notamment ceux exposés ci-avant.

A cet effet, et selon un premier aspect, il est proposé par la présente invention, un procédé de fonctionnement d'un système radar. Le procédé comporte les étapes suivantes :

- une transmission d'un signal comprenant, pendant une période de répétition, une pluralité d'impulsions, chaque impulsion étant transmise dans un canal fréquentiel d'émission différent et pendant un intervalle de temps différent,
- une réception d'un signal comprenant une réflexion du signal transmis par une cible dont on cherche à estimer une position et/ou une vitesse, le signal reçu comprenant également du bruit et du fouillis,
- un filtrage du signal reçu par un banc de filtres numériques, chaque filtre numérique présentant respectivement une bande passante associée à l'un des canaux fréquentiels d'émission et fournissant en sortie un signal associé à un canal fréquentiel de réception,
- un filtrage adapté du signal de chaque canal fréquentiel de réception pendant une sous-période d'intégration,
- une séparation des résultats de filtrage adapté en plusieurs groupes, de telle sorte que les résultats de filtrage adapté appartenant à un même groupe présentent des décalages de phase sensiblement égaux,
- pour chaque groupe, une combinaison cohérente des résultats de filtrage adapté appartenant audit groupe,
- un filtrage Doppler des résultats de filtrage adapté obtenus pour les différents canaux fréquentiels de réception pour plusieurs sous-périodes d'intégration successives formant une période d'intégration cohérente recouvrant plusieurs périodes de répétition successives, ledit filtrage Doppler étant basé sur les combinaisons cohérentes obtenues pour les différents groupes,
- une détermination d'une distance et d'un vecteur directeur Doppler qui maximisent un rapport signal sur bruit plus fouillis pour le signal reçu,
- une estimation de la position et/ou de la vitesse de la cible à partir de la distance et du vecteur directeur Doppler ainsi déterminés.

De telles dispositions permettent d'obtenir à la fois les avantages d'une émission pulsée et les avantages d'une émission continue ou d'une émission avec un grand rapport cyclique. En effet, dans chaque canal fréquentiel, l'émission se fait sous une forme d'onde pulsée, ce qui permet de limiter la largeur du pic de corrélation ainsi que l'étendue et l'amplitude des lobes secondaires. En outre, le fait d'avoir plusieurs impulsions dans une période de répétition permet de limiter le rapport entre la puissance moyenne et la puissance crête. En effet, le rapport cyclique correspond au rapport entre la durée cumulée de tous les intervalles de temps et la période de répétition. Ainsi, si on compare avec une forme d'onde radar conventionnelle pour laquelle une seule impulsion est transmise par période de répétition, le rapport cyclique est multiplié par le nombre d'intervalles de temps compris dans une période de répétition. Cette augmentation du rapport cyclique permet de limiter le rapport entre la puissance moyenne et la puissance crête. Par exemple, le rapport cyclique est au moins égal à 50%. Lorsque les intervalles de temps pendant lesquels les impulsions sont transmises recouvrent entièrement la période de répétition, on se trouve dans le cas d'une forme d'onde à émission continue et le rapport entre la puissance moyenne et la puissance crête est optimal.

L'utilisation de plusieurs canaux fréquentiels d'émission différents permet d'avoir accès à un échantillonnage de la phase du signal plus fréquent que dans le cas d'une unique émission pulsée et permet d'augmenter la gamme de vitesse non ambiguë mesurée par traitement Doppler. Cela peut permettre d'améliorer la précision des paramètres géophysiques qui peuvent en être déduits (spectre de vitesses d'hydrométéores par exemple). Cela a également un impact positif sur le filtrage Doppler pour éliminer le fouillis.

Dans des modes particuliers de mise en oeuvre, l'invention peut comporter en outre l'une ou plusieurs des caractéristiques suivantes, prises isolément ou selon toutes les combinaisons techniquement possibles.

Dans des modes particuliers de mise en oeuvre, il y a autant de canaux fréquentiels d'émission que d'intervalles de temps dans la période de répétition, et les intervalles de temps recouvrent entièrement la période de répétition.

Avec de telles dispositions, les intervalles de temps pendant lesquels les impulsions sont transmises recouvrent entièrement la période de répétition. On se trouve dans le cas d'une forme d'onde à émission continue. Cela permet de conserver une enveloppe de puissance quasiment constante et ainsi d'optimiser le rapport entre la puissance moyenne et la puissance crête. Si on compare avec une forme d'onde radar conventionnelle pour laquelle une seule impulsion est transmise par période de répétition, la bande passante occupée par le signal transmis est significativement augmentée.

Dans des modes particuliers de mise en oeuvre, pour au moins un canal fréquentiel d'émission, ledit canal fréquentiel d'émission est associé à un intervalle de temps différent d'une période de répétition à une autre .

Autrement dit, l'intervalle de temps pendant lequel une impulsion est transmise dans un canal fréquentiel d'émission varie d'une période de répétition à une autre.

Dans des modes particuliers de mise en oeuvre, au moins un canal fréquentiel d'émission varie d'une période d'intégration cohérente à une autre.

La variation de l'ordre dans lequel les impulsions sont transmises dans les différents canaux fréquentiels d'émission, et/ou la variation des canaux fréquentiels d'émission eux-mêmes rendent le système moins prédictible et donc plus résilient au brouillage.

Dans des modes particuliers de mise en oeuvre, pour au moins un intervalle de temps donné, plusieurs impulsions sont transmises dans des canaux fréquentiels d'émission différents.

La surface radar équivalente (SER, ou RCS en anglais pour « Radar Cross Section ») d'une cible peut en effet varier avec la fréquence. Il peut donc être avantageux de diversifier dans le domaine fréquentiel plusieurs impulsions émises dans un même intervalle de temps.

Dans des modes particuliers de mise en oeuvre, les canaux fréquentiels d'émission sont compris entre 94 GHz et 94,5 GHz, ou entre 9 GHz et 10 GHz.

Dans des modes particuliers de mise en oeuvre, la largeur de bande d'un canal fréquentiel est comprise entre 1 MHz et 100 MHz et les fréquences centrales de deux canaux fréquentiels d'émission différents sont séparées d'au moins une fois la largeur de bande.

Dans des modes particuliers de mise en oeuvre, la durée d'un intervalle de temps est compris entre 1 $\mu$s et 1 ms.

Dans des modes particuliers de mise en oeuvre, le nombre d'intervalles de temps compris dans une période de répétition est compris entre 8 et 1024.

Selon un deuxième aspect, la présente invention concerne un système radar comprenant :

- un dispositif émetteur configuré pour transmettre un signal comprenant, pendant une période de répétition, une pluralité d'impulsions, chaque impulsion étant transmise dans un canal fréquentiel d'émission différent et pendant un intervalle de temps différent,
- un dispositif récepteur configuré pour recevoir un signal comprenant une réflexion du signal transmis par une cible dont on cherche à estimer une position et/ou une vitesse, le signal reçu comprenant également du bruit et du fouillis,
- une unité de traitement comprenant :

  ◦ un banc de filtres numériques configuré pour effectuer un filtrage du signal reçu, chaque filtre numérique présentant respectivement une bande passante associée à l'un des canaux fréquentiels d'émission et fournissant en sortie un signal associé à un canal fréquentiel de réception,
  ◦ un module de filtrage adapté configuré pour effectuer un filtrage adapté du signal de chaque canal fréquentiel de réception pendant une sous-période d'intégration,
  ◦ un module de combinaison configuré pour séparer les résultats de filtrage adapté en plusieurs groupes, de telle sorte que les résultats de filtrage adapté appartenant à un même groupe présentent des décalages de phase sensiblement égaux et, pour chaque groupe, effectuer une combinaison cohérente des résultats de filtrage adapté appartenant audit groupe,
  ◦ un module de filtrage Doppler configuré pour effectuer un filtrage Doppler des résultats de filtrage adapté obtenus pour les différents canaux fréquentiels de réception pour plusieurs sous-périodes d'intégration successives formant une période d'intégration cohérente recouvrant plusieurs périodes de répétition successives, le filtrage Doppler étant basé sur les combinaisons obtenues en sortie du module de combinaison, et pour déterminer une distance et un vecteur directeur Doppler qui maximisent un rapport signal sur bruit plus fouillis pour le signal reçu,

- une unité de localisation configuré pour estimer la position et/ou la vitesse de la cible à partir de la distance et du vecteur directeur Doppler ainsi déterminés.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation, il y a autant de canaux fréquentiels d'émission que d'intervalles de temps dans la période de répétition, et les intervalles de temps recouvrent entièrement la période de répétition.

Dans des modes particuliers de réalisation, le système radar est bi-statique, le dispositif émetteur et le dispositif récepteur étant séparés l'un de l'autre.

Dans des modes particuliers de réalisation, le dispositif émetteur est destiné à être embarqué dans un satellite en orbite autour de la Terre, ledit système radar étant destiné à la surveillance aérienne.

Dans des modes particuliers de réalisation, le système radar est un système radar mono-statique destiné à être embarqué dans un satellite en orbite autour de la Terre, ledit système radar étant destiné à la surveillance météorologique.

Selon un troisième aspect, la présente invention concerne une unité de traitement d'un système radar pour traiter un signal reçu par un dispositif récepteur dudit système radar. Le signal reçu comprend une réflexion d'un signal transmis par un dispositif émetteur dudit système radar, ledit signal transmis comprenant, pendant une période de répétition, une pluralité d'impulsions, chaque impulsion étant transmise dans un canal fréquentiel d'émission différent et pendant un intervalle de temps différent. Le signal reçu comprend également du bruit et du fouillis. L'unité de traitement comprend :

- un banc de filtres numériques configuré pour filtrer le signal reçu, chaque filtre numérique présentant respectivement une bande passante associée à l'un des canaux fréquentiels d'émission et fournissant en sortie un signal associé à un canal fréquentiel de réception,
- un module de filtrage adapté configuré pour effectuer un filtrage adapté du signal de chaque canal fréquentiel de réception pendant une sous-période d'intégration,
- un module de combinaison configuré pour séparer les résultats de filtrage adapté en plusieurs groupes, de telle sorte que les résultats de filtrage adapté appartenant à un même groupe présentent des décalages de phase sensiblement égaux et, pour chaque groupe, effectuer une combinaison cohérente des résultats de filtrage adapté appartenant audit groupe,
- un module de filtrage Doppler configuré pour effectuer un filtrage Doppler des résultats de filtrage adapté obtenus pour les différents canaux fréquentiels de réception pour plusieurs sous-périodes d'intégration successives formant une période d'intégration cohérente recouvrant plusieurs périodes de répétition successives, le filtrage Doppler étant basé sur les combinaisons obtenues en sortie du module de combinaison, et pour déterminer une distance et un vecteur directeur Doppler qui maximisent un rapport signal sur bruit plus fouillis pour le signal reçu.

Selon un quatrième aspect, la présente invention concerne un support lisible par ordinateur comprenant des instructions destinées à être exécutées par une unité de traitement d'un système radar pour traiter un signal reçu par un dispositif récepteur dudit système radar. Le signal reçu comprend une réflexion d'un signal transmis par un dispositif émetteur dudit système radar, ledit signal transmis comprenant, pendant une période de répétition, une pluralité d'impulsions, chaque impulsion étant transmise dans un canal fréquentiel d'émission différent et pendant un intervalle de temps différent. Le signal reçu comprend également du bruit et du fouillis. Les instructions conduisent l'unité de traitement à :

- filtrer le signal reçu par un ensemble de filtres numériques, chaque filtre numérique présentant respectivement une bande passante associée à l'un des canaux fréquentiels d'émission et fournissant en sortie un signal associé à un canal fréquentiel de réception,
- effectuer un filtrage adapté du signal de chaque canal fréquentiel de réception pendant une sous-période d'intégration,
- séparer les résultats de filtrage adapté en plusieurs groupes, de telle sorte que les résultats de filtrage adapté appartenant à un même groupe présentent des décalages de phase sensiblement égaux,
- pour chaque groupe, combiner de façon cohérente les résultats de filtrage adapté appartenant audit groupe,
- effectuer un filtrage Doppler des résultats de filtrage adapté obtenus pour les différents canaux fréquentiels de réception pour plusieurs sous-périodes d'intégration successives formant une période d'intégration cohérente recouvrant plusieurs périodes de répétition successives, le filtrage Doppler étant basé sur les combinaisons obtenues,

- déterminer une distance et un vecteur directeur Doppler qui maximisent un rapport signal sur bruit plus fouillis pour le signal reçu.

**Présentation des figures**

L'invention sera mieux comprise à la lecture de la description suivante, donnée à titre d'exemple nullement limitatif, et faite en se référant aux figures 1 à 9 qui représentent :

[Fig. 1] une représentation schématique d'un exemple d'un système radar bi-statique dédié à la surveillance aérienne,
[Fig. 2] une représentation schématique d'un exemple d'un système radar mono-statique dédié à la surveillance météorologique,
[Fig. 3] une représentation schématique d'une impulsion transmise par le dispositif émetteur d'un système radar,
[Fig. 4] une représentation schématique des principales étapes d'un procédé de fonctionnement d'un système radar selon l'invention,
[Fig. 5] une représentation schématique d'une forme d'onde d'un signal transmis par le dispositif émetteur d'un système radar selon l'invention,
[Fig. 6] une illustration des décalages de phase observés pour les différentes impulsions transmises conformément à la forme d'onde de la figure,
[Fig. 7] une représentation schématique des principales étapes d'un mode particulier de mise en oeuvre d'un procédé de fonctionnement d'un système radar selon l'invention, [Fig. 8] un exemple d'agrégation des impulsions pour compenser le déphasage différentiel des différents canaux fréquentiels,
[Fig. 9] une représentation schématique d'un exemple de réalisation d'un système radar 10 selon l'invention.

Dans ces figures, des références identiques d'une figure à une autre désignent des éléments identiques ou analogues. Pour des raisons de clarté, les éléments représentés ne sont pas nécessairement à une même échelle, sauf mention contraire.

**Description détaillée d'un mode de réalisation de l'invention**

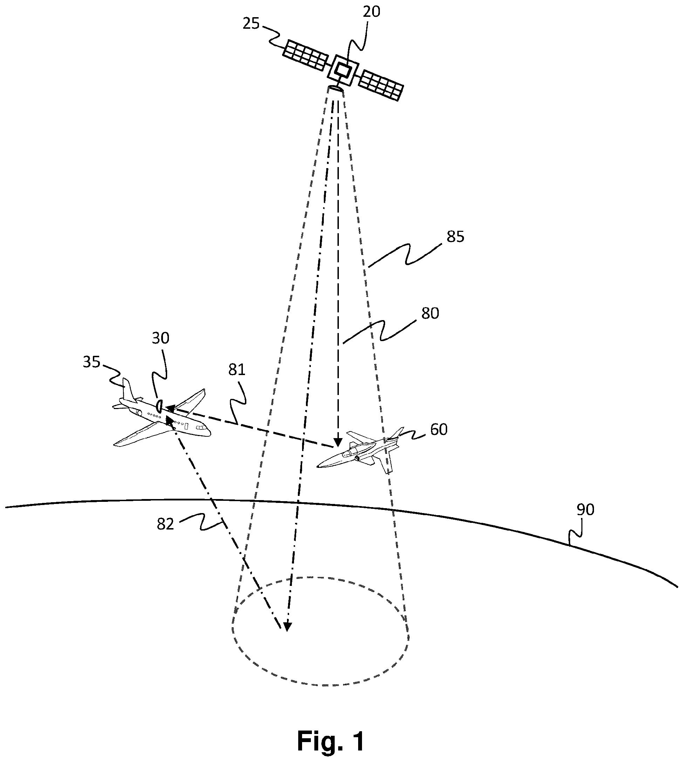

La figure 1 représente schématiquement un exemple d'un système radar bi-statique dédié à la surveillance aérienne. La cible 60 visée par le système radar bi-statique est un aéronef, par exemple un avion. Dans l'exemple considéré et illustré sur la figure 1, le système radar bi-statique comporte un dispositif émetteur 20 embarqué dans un satellite 25 en orbite autour de la Terre 90. Le dispositif émetteur 20 correspond à la charge utile, ou à une partie au moins de la charge utile du satellite 25 dans lequel il est embarqué. Le système radar bi-statique comporte également un système récepteur 30. Dans l'exemple considéré, le dispositif récepteur 30 est embarqué dans un avion 35. Rien n'empêcherait cependant que le dispositif récepteur 30 soit embarqué dans un autre type de plate-forme, comme par exemple un autre satellite, un bateau ou un véhicule terrestre.

Le dispositif émetteur 20 est configuré pour transmettre un signal 80 dans un faisceau radio 85 orienté vers la Terre 90. Lorsqu'une cible 60 est présente dans le faisceau radio 85 formé par le dispositif émetteur 20, le signal 80 transmis est réfléchi par la cible 60. Le signal 80 transmis est également réfléchi par le sol. Le signal reçu par le dispositif récepteur 30 comporte donc non seulement le signal 81 réfléchi par la cible 60 mais aussi le signal 82 réfléchi par le sol. Le signal 82 réfléchi par le sol correspond au fouillis radar. Le signa reçu par le dispositif récepteur 30 peut également comporter un signal directement reçu du dispositif émetteur 20 et du bruit.

Dans l'exemple considéré et illustré sur la figure 1, le dispositif émetteur 20 et le dispositif récepteur 30 sont synchronisés en temps et en fréquence. Aussi, le dispositif récepteur 30 a connaissance du contenu et de l'instant d'émission du signal 80 transmis par le dispositif émetteur 20. Le dispositif récepteur 30 comporte par exemple une mémoire électronique dans laquelle est mémorisé des paramètres nécessaires à la génération d'une réplique du signal 80 émis par le dispositif émetteur 20. Un calcul d'une fonction d'ambiguïté entre cette réplique et le signal reçu peut alors permettre de détecter et de géolocaliser la cible 60. En effet, les décalages en temps et en fréquence du signal 82 réfléchi par la cible 60 par rapport au signal 80 transmis par le dispositif émetteur 20 sont représentatifs de la position de la cible 60 par rapport au dispositif émetteur 20 et au dispositif récepteur 30.

Il est à noter que le niveau de puissance reçue pour le signal 82 réfléchi par la surface de la Terre 90 peut être significativement supérieur au niveau de puissance reçue pour le signal 81 réfléchi par la cible 60. Le fouillis radar peut alors nuire à la capacité de détection de la cible 60.

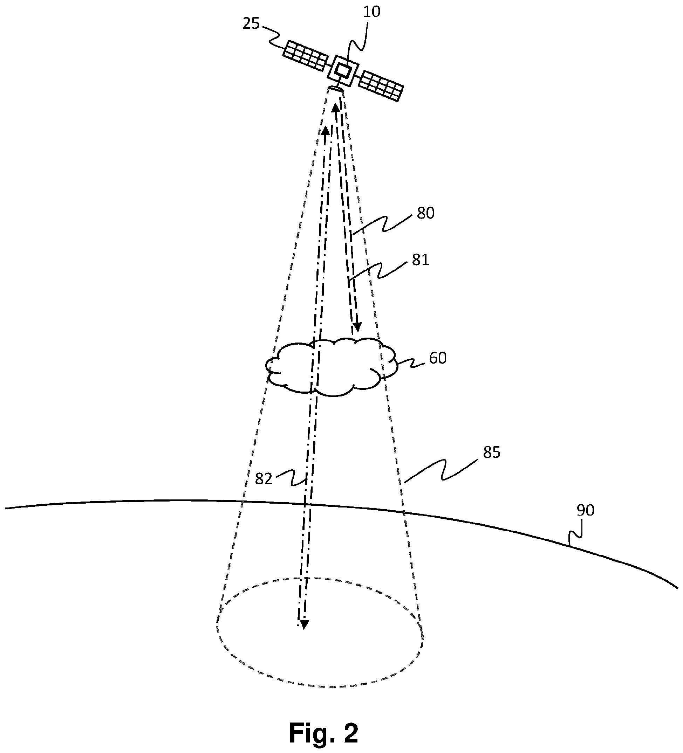

La figure 2 représente schématiquement un exemple d'un système radar 10 mono-statique dédié à la surveillance météorologique. Dans l'exemple considéré et illustré sur la figure 2, le système radar 10 mono-statique est embarqué dans un satellite 25 en orbite autour de la Terre. A la fois dispositif émetteur et le dispositif récepteur du système radar 10 mono-statique sont embarqués dans le satellite 25. Les cibles 60 d'intérêt du système radar 10 mono-statique sont les hydrométéores, comme par exemple les gouttes d'eau d'un nuage.

Là encore, le signal reçu par le dispositif récepteur du système radar 10 comporte non seulement le signal 81 réfléchi par la cible 60, mais aussi le signal 82 réfléchi par le sol. Le signal 82 réfléchi par le sol correspond au fouillis radar et il peut présenter un niveau de puissance reçue significativement supérieur au niveau de puissance reçue pour le signal 81 réfléchi par la cible 60.

Pour distinguer une cible d'intérêt du fouillis, on peut avoir recours à différentes opérations de traitement sur le signal reçu. Ces opérations visent à maximiser le rapport signal sur bruit plus fouillis (SNCR, acronyme anglais pour « Signal-to-Noise-plus-Clutter Ratio »).

En particulier, une discrimination en distance peut être effectuée à l'aide d'un filtrage adapté à la forme d'onde émise. Le filtrage adapté revient à corréler le signal reçu avec le signal émis. Une cible peut être distinguée du bruit et du fouillis en séparant des pics d'énergie distincts dans le temps après filtrage adapté. Une discrimination dans le domaine fréquentiel peut également être effectuée à l'aide d'un filtrage Doppler. Eventuellement, on peut aussi avoir recours à un traitement adaptatif spatio-temporel (STAP, acronyme anglais pour « Space Time Adaptive Processing »).

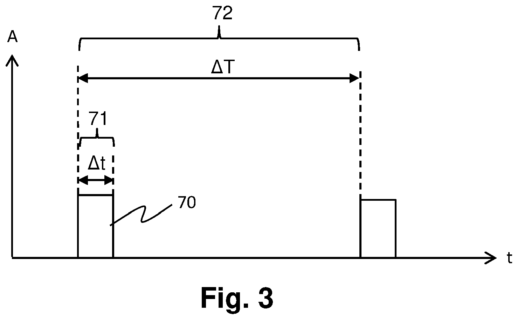

La figure 3 représente schématiquement un exemple d'une forme d'onde d'un signal transmis par le dispositif émetteur d'un système radar. L'axe des abscisses représente le temp ; l'axe des ordonnées représente l'amplitude du signal transmis. Dans l'exemple illustré à la figure 3, la forme d'onde est pulsée, c'est-à-dire que le signal transmis comporte une impulsion 70 qui se répète au cours du temps. Dans l'exemple considéré, l'impulsion est transmise pendant un intervalle de temps 71 de durée $\Delta t$ et l'impulsion est répétée régulièrement avec une période de répétition 72 de durée $\Delta T$.

Le signal transmis par le dispositif émetteur peut s'écrire sous la forme :

[Math.1]

$$s(t) = a_{TX}u(t)$$

dans laquelle $u(t)$ est la forme d'onde d'une impulsion (amplitude de valeur '1' pendant une durée $\Delta t$) et $a_{TX}$ est l'amplitude du signal transmis. Il convient de noter que la fréquence porteuse $f_c$ n'est pas mentionnée par souci de simplification.

Le signal réfléchi par une cible située à une distance $R = \dfrac{c\tau_t}{2}$ et présentant une vitesse radiale $v_t$ peut s'écrire sous la forme :

[Math. 2]

$$r(t) = a_{RX}u(t - \tau_t)\exp(i2\pi f_d\,(t - \tau_t)) + n(t)$$

Dans cette expression, $a_{RX}$ est l'amplitude du signal réfléchi, $n(t)$ est un signal de bruit reçu par la chaîne de réception RF du dispositif récepteur, $f_d$ est la fréquence Doppler induite par le déplacement de la cible. Dans le cas d'un système radar mono-statique, la fréquence Doppler est égale à $f_d = \dfrac{2v_t}{c}f_c$.

Si l'on considère une portion du signal reçu de durée $\Delta T$ entre un instant $T_i$ et un instant $(T_i + \Delta T)$ pour laquelle $\exp\left(\dfrac{i4\pi v_t f_c}{c}t\right) \approx \exp(i2\pi f_d T_i)$, la détection de l'énergie reçue peut être optimisée en utilisant une détection par filtrage adapté :

[Math. 3]

$$m^i(\tau) = \frac{1}{\Delta T}\int_{T_i}^{T_i+\Delta T} r^*(t + \tau)\,u(t)dt$$

Le signal $r^*(t)$ est le conjugué complexe du signal $r(t)$.

[Math. 4]

$$m^i(\tau) = \frac{1}{\Delta T} \int_{T_i}^{T_i + \Delta T} a_{RX}\, u^*(t - \tau_t + \tau)u(t) \exp(i2\pi f_d(T_i - \tau_t))dt$$

$$+ \frac{1}{\Delta T} \int_{T_i}^{T_i + \Delta T} u(t)n^*(t + \tau)\, dt$$

[Math. 5]

$$m^i(\tau) = y^i(\tau) + n'^i(\tau)$$

Dans cette expression, $y^i(\tau)$ correspond au signal utile et $n'^i(\tau)$ correspond au bruit. Le signal utile $y^i(\tau)$ correspond à l'inter-corrélation de la forme d'onde du signal transmis avec les signaux réfléchis avec un terme de phase induit par le décalage Doppler. Cela peut s'écrire en fonction d'une fonction d'auto-corrélation $R^i$ de la forme d'onde du signal transmis :

[Math. 6]

$$y^i(\tau) = a_{RX}R^i(\tau - \tau_t)\, \exp(i2\pi f_d(T_i - \tau_t))$$

Le module de cette expression prend une valeur maximale égale à $a_{RX}$ lorsque $\tau = \tau_t$. Le signal $n'^i(\tau)$ correspond à l'inter-corrélation de la forme d'onde du signal transmis avec le bruit. Comme le signal utile $y^i(\tau)$ et le bruit $n'^i(\tau)$ sont décorrélés, on peut montrer que la variance du bruit vaut :

[Math. 7]

$$\frac{\sigma^2}{B\Delta T}$$

Dans cette expression, B correspond à la bande passante du signal transmis par le dispositif émetteur.
A la sortie du filtrage adapté, le rapport signal sur bruit pour le délai correspondant à la distance de la cible est:

[Math. 8]

$$SNR_{mf} = \frac{a_{RX}^2 B\Delta T}{\sigma^2}$$

En considérant des signaux numériques, le filtrage adapté est effectué sur des portions de signal comportant un nombre M de points, avec $M = f_s\Delta T$, où $f_s$ est la fréquence d'échantillonnage. A chaque instant $k/f_s$, et les opérations de filtrage adapté deviennent :

[Math. 9]

$$m^i[k] = \frac{1}{M} \sum_{n=iM}^{(i+1)M-1} u[n]r^*[n - k]$$

[Math. 10]

$$m^i[k] = a_{RX}R^i[k - \tau_t f_s] \exp(i\frac{2\pi f_d}{f_s}Mi) + n'^i[k]$$

La variance du bruit $n'^i[k]$ vaut $\sigma^2/M$.

Pour améliorer encore le rapport signal sur bruit, puisque le filtrage adapté est limité par la condition selon laquelle la variation de phase induite par le décalage Doppler doit rester faible, un filtrage Doppler peut être mis en oeuvre sur un nombre L de résultats successifs du filtrage adapté :

[Math. 11]

$$m^i[k] = a_{RX}R^i[k - \tau_t f_s] \exp(i\frac{2\pi f_d}{f_s} Mi) + n'^i[k] \quad i \in [0 \,;\, (L-1)]$$

Le filtrage Doppler peut donc être vu comme l'analyse de la sortie d'un filtre à réponse impulsionnelle finie de longueur M. La sortie d'un tel filtre peut s'écrire :

[Math. 12]

$$V[k, f_d] = \sum_{l=0}^{L-1} \omega_l a_{RX}R^i[k - \tau_t f_s]\exp\left(i\frac{2\pi f_d}{f_s} Ml\right) + \sum_{l=0}^{L-1} \omega_l n'^i[k]$$

En supposant que la fonction de corrélation est constante au cours du temps et en utilisant une notation matricielle pour les coefficients de filtrage $\omega = [\omega_0 \dots \omega_{L-1}]^T$ et pour le vecteur directeur Doppler $s(f_d) = [1 \dots \exp\left(i\frac{2\pi f_d}{f_s} M(L-1)\right)]^T$, on obtient :

[Math. 13]

$$V[k, f_d] = a_{RX}R[k - \tau_t f_s]\omega^H s(f_d) + \omega^H n'$$

La matrice $A^H$ est la matrice transconjuguée (aussi appelée conjuguée hermitienne) de la matrice $A$.

Pour calculer le SNR, il faut évaluer la puissance du signal utile et la puissance du bruit. Le bruit a une variance :

[Math. 14]

$$E[\omega^H nn^H \omega] = \omega^H R_n \omega = \sigma^2 \|\omega\|^2$$

L'opérateur $E[.]$ est l'espérance mathématique. L'opérateur $\|.\|$ est la norme euclidienne.

La puissance du signal utile est représentée par :

[Math. 15]

$$(a_{RX}R[k - \tau_t f_s])^2 |\omega^H s(f_d)|^2$$

Après filtrage Doppler, le SNR devient donc :

[Math. 16]

$$SNR = \frac{(a_{RX}R[k - \tau_t f_s])^2 |\omega^H s(f_d)|^2}{\sigma^2 \|\omega\|^2}$$

Le SNR peut être maximisé, à l'aide de l'inégalité de Cauchy Schwarz, pour $\omega = b\, s(f_d)$, $b$ étant une constante, et le SNR correspondant est $La_{RX}^2/\sigma^2$ pour l'indice k correspondant à la distance de la cible. Le filtrage Doppler optimal correspond à la transformée de Fourier discrète (TFD, ou DFT pour l'acronyme anglais de « Discrète Fourier Transform ») des résultats de filtrage adapté successifs sur les L portions. Le filtrage Doppler peut être traité efficacement en utilisant un algorithme basé sur la transformée de Fourier rapide (FFT pour l'acronyme anglais de « Fast Fourier Transform »).

Si l'on prend maintenant en compte un fouillis radar formé par la présence d'un nombre $N_C$ de cibles avec un délai $\tau_{i_c}$ et une fréquence Doppler $f_{dic}$, la sortie du filtrage Doppler devient :

[Math. 17]

$$V[k, f_d] = a_{RX}R[k - \tau_t f_s]\omega^H s(f_d) + \sum_{i_c=1}^{N_c} a_{C_{i_c}} R[k - \tau_{i_c} f_s]\omega^H s\left(f_{d_{i_c}}\right) + \omega^H n'$$

La puissance du fouillis est représentée par :

[Math. 18]

$$P_c = \sum_{i=1}^{N_c} E[(a_{C_i}R[k - \tau_i f_s])^2 \omega^H s(f_{d_i})s(f_{d_i})^H \omega]$$

$$= \omega^T \left(\sum_{i=1}^{N_c} (a_{C_i}R[k - \tau_i f_s])^2 s(f_{d_i})s(f_{d_i})^H\right)\omega$$

Dans cette expression, le terme suivant correspond à la matrice de covariance du fouillis :

[Math. 19]

$$R_c = \left(\sum_{i=1}^{N_c} (a_{C_i}R[k - \tau_i f_s]^2) s(f_{d_i})s(f_{d_i})^H\right)$$

Ainsi, en présence du fouillis, pour maximiser le rapport signal sur bruit plus fouillis (SNCR), il convient de déterminer les coefficients $\omega$ du filtre tel que :

[Math. 20]

$$SNCR_{max} = \max_{\omega} \frac{(a_{RX}R[k - \tau_t f_s])^2 |\omega^H s(f_d)|^2}{\omega^H(\sigma^2 I + R_c)\omega}$$

La matrice $R_{cn} = (\sigma^2 I + R_c)$ est la matrice de covariance de bruit plus fouillis. C'est une matrice semi-définie positive et il existe une racine carrée de $R_{cn}$ ainsi que son inverse.

[Math. 21]

$$SNCR = \frac{(a_{RX}R[k - \tau_t f_s])^2 |\omega^H s(f_d)|^2}{\omega^H(\sigma^2 I + R_c)\omega} = \frac{(a_{RX}R[k - \tau_t f_s])^2 \left|\omega^H R_{cn}^{\frac{1}{2}} R_{cn}^{-\frac{1}{2}} s(f_d)\right|^2}{\omega^H R_{cn}^{1/2} R_{cn}^{1/2} \omega}$$

En notant $s_R(f_D) = R_{cn}^{-\frac{1}{2}} s(f_D)$ et $\omega_R = R_{cn}^{\frac{1}{2}}\omega$, on obtient :

[Math. 22]

$$SNCR = \frac{(a_{RX}R[k - \tau_t f_s])^2 \left| \omega_R^H s_R(f_d) \right|^2}{\omega_R^H \omega_R}$$

Le rapport signal sur bruit plus fouillis (SNCR) est maximal pour $\omega_R = a\, s_R(f_D)$, $a$ étant une constante, et donc

$$\omega = R_{cn}^{-1} s(f_d)$$

Le rapport signal sur bruit plus fouillis maximal (SNCR$_{max}$) obtenu pour un filtre présentant de tels coefficients est :

[Math. 23]

$$SNCR_{max} = (a_{RX}R[k - \tau_t f_s])^2 s^H(f_d) R_{cn}^{-1} \, s(f_d)$$

Dans le cas d'un système radar bi-statique spatial pour la surveillance aérienne tel que celui décrit en référence à la figure 1, il convient généralement d'utiliser une durée d'impulsion $\Delta t$ particulièrement courte pour éliminer efficacement le fouillis. Un filtrage STAP est en outre généralement nécessaire pour isoler le signal utile du fouillis. L'utilisation d'une forme d'onde pulsée de courte durée impose toutefois des contraintes fortes sur la puissance crête requise. Pour réduire la puissance crête requise, il conviendrait d'augmenter la durée de l'impulsion, mais cela n'est généralement pas envisageable car les lobes secondaires entraînent alors une forte augmentation de la contamination du signal par le fouillis.

Dans le cas d'un système radar mono-statique spatial pour la surveillance météorologique tel que celui décrit en référence à la figure 2, l'utilisation d'impulsions courtes est préférable pour distinguer des hydrométéores dans l'atmosphère du fouillis provenant des signaux réfléchis par le sol. Ces impulsions courtes doivent être suffisamment espacées afin d'obtenir une distance maximale non ambiguë compatible pour des cibles situées dans l'atmosphère à des altitudes variant entre le niveau du sol et le sommet de la troposphère, soit environ seize kilomètres à l'équateur. Toutefois, cela conduit à une grande séparation temporelle des impulsions et donc à une vitesse Doppler maximale non ambiguë relativement faible, surtout pour une porteuse à haute fréquence.

C'est pourquoi l'invention propose de combiner les avantages d'une forme d'onde pulsée (réduction des lobes secondaires, optimisation de la distance maximale non ambiguë) et les avantages d'une forme d'onde présentant un rapport cyclique élevé (réduction du rapport puissance crête sur puissance moyenne, optimisation de la vitesse Doppler maximale non ambiguë).

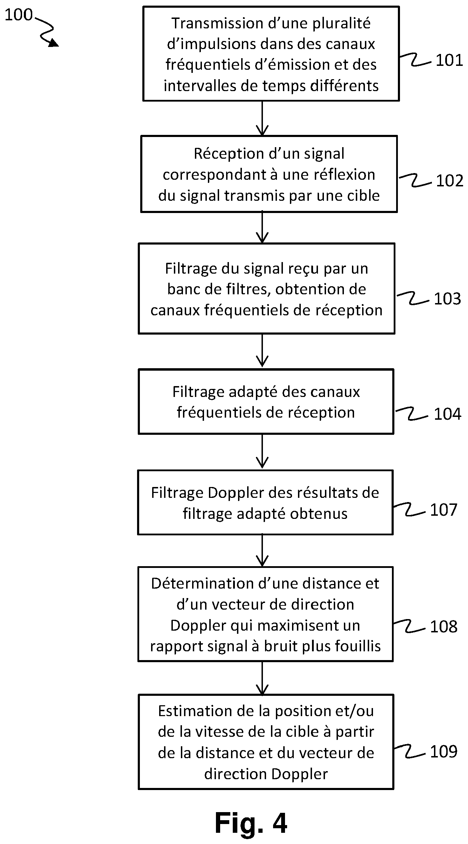

La figure 4 représente schématiquement les principales étapes d'un procédé 100 de fonctionnement d'un système radar selon l'invention.

Le procédé comporte tout d'abord une étape de transmission 101, par le dispositif émetteur du système radar, d'un signal avec une forme d'onde particulière.

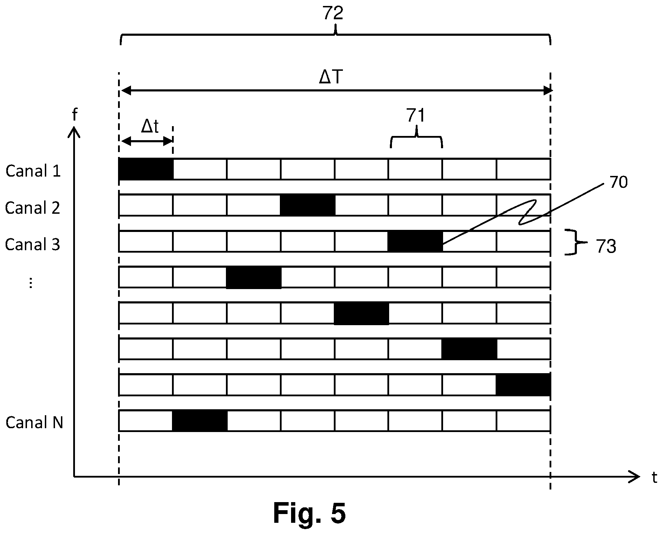

La forme d'onde du signal transmis est illustrée à la figure 5. Tel qu'illustré à la figure 5, le signal comprend, pendant une période de répétition 72, une pluralité d'impulsions 70. Chaque impulsion 70 est transmise dans un canal fréquentiel d'émission 73 différent et pendant un intervalle de temps 71 différent de la période de répétition 72. La transmission de la pluralité d'impulsions est répétée à chaque période de répétition 72. La durée d'une impulsion 70 est notée $\Delta t$. La durée d'une période de répétition 72 est notée $\Delta T$.

Ainsi, chaque impulsion 70 est associée à un canal fréquentiel d'émission 73 et à un intervalle de temps 71 dans la période de répétition 72, et il y a une pluralité d'impulsions 70 présentant deux à deux un canal fréquentiel d'émission 73 et un intervalle de temps 71 différent pendant une période de répétition 72. Sur la figure 5, pour un canal fréquentiel d'émission 73 donné, un intervalle de temps 71 pendant lequel une impulsion 70 est transmise est représenté en noir.

Dans l'exemple considéré et illustré à la figure 5, il y a huit canaux fréquentiels d'émission 73 différents (canal 1, canal 2, ..., canal N, avec N = 8) et autant d'intervalles de temps 71 dans une période de répétition 72. Les huit intervalles de temps 71 ont tous la même durée et ils recouvrent entièrement la période de répétition 72 (autrement dit, la somme cumulée des durées des intervalles de temps 71 est égale à la durée d'une période de répétition ($\Delta T = N \times \Delta t$). De telles dispositions permettent de conserver une enveloppe de puissance quasiment constante et ainsi d'optimiser le rapport entre la puissance moyenne et la puissance crête.

Un canal fréquentiel d'émission 73 correspond à une sous-bande de fréquences définie par une fréquence d'émission et par une largeur de bande. Les largeurs des sous-bandes de fréquences des différents canaux fréquentiels d'émission 73 ne sont pas nécessairement identiques. Les canaux fréquentiels d'émission 73 appartiennent à une bande de fréquences et peuvent être agencées uniformément ou non uniformément autour d'une fréquence centrale de ladite bande de fréquences. Les différents canaux fréquentiels d'émission 73 sont différents au sens où ils sont disjoints les uns des autres (ils sont isolés fréquentiellement les uns des autres).

Il convient de noter que les différents intervalles de temps 71 pourraient présenter des durées différentes. Aussi, rien n'oblige à ce que les intervalles de temps 71 recouvrent entièrement la période de répétition 72.

La durée de la période de répétition 72 peut être définie en fonction d'une distance maximale non ambigüe souhaitée. Eventuellement, la durée de la période de répétition 72 peut être variable au cours du temps.

Tel qu'illustré sur la figure 4, le procédé 100 comporte une étape de réception 102, par le dispositif récepteur du système radar, d'un signal comprenant une réflexion du signal transmis par une cible dont on cherche à estimer une position et/ou une vitesse. Comme cela a été expliqué précédemment, le signal reçu comprend généralement aussi du bruit et du fouillis.

Le procédé 100 comporte une étape de filtrage 103 du signal reçu par un banc de filtres numériques. Chaque filtre numérique présente respectivement une bande passante associée à l'un des canaux fréquentiels d'émission 73 et fournit en sortie un signal associé à un canal fréquentiel de réception.

Le procédé 100 comporte ensuite une étape de filtrage adapté 104 du signal de chaque canal fréquentiel de réception pendant une sous-période d'intégration. La durée d'une sous-période d'intégration correspond par exemple à la durée ΔT d'une période de répétition 72. Une sous-période de répétition pourrait toutefois correspondre à une fraction de la période de répétition 72. De préférence, la durée d'une sous-période d'intégration est supérieure à la durée Δt d'un intervalle de temps 71.

Le procédé 100 comporte ensuite une étape de filtrage Doppler 107 des résultats de filtrage adapté obtenus pour les différents canaux fréquentiels de réception pour une pluralité de sous-périodes d'intégration successives formant une période d'intégration cohérente recouvrant plusieurs périodes de répétition 72 successives.

Le procédé 100 comporte ensuite une étape de détermination 108 d'une distance et d'un vecteur directeur Doppler qui maximisent un rapport signal sur bruit plus fouillis pour le signal reçu, puis une étape d'estimation 109 de la position et/ou de la vitesse de la cible à partir de la distance et du vecteur directeur Doppler ainsi déterminés.

Les étapes de filtrage 103 par le banc de filtres numériques, de filtrage adapté 104, de filtrage Doppler 107, de maximisation du rapport signal sur bruit plus fouillis et d'estimation 109 de la position et/ou de la vitesse de la cible sont par exemple mises en oeuvre par une unité de traitement appartenant au dispositif récepteur du système radar. Rien n'empêcherait toutefois que ces étapes soient mises en oeuvre par une unité de traitement appartenant à une entité physique distincte du dispositif récepteur. Dans ce cas, des échantillons numériques du signal reçu par le dispositif récepteur sont transmis à ladite entité physique pour traitement. L'entité physique comportant l'unité de traitement peut alors être éloignée géographiquement du dispositif de réception du système radar. Dans des variantes, une partie seulement de ces étapes est mise en oeuvre par une unité de traitement appartenant au dispositif récepteur, et l'autre partie de ces étapes est mise en oeuvre par une autre entité. Par exemple, il est envisageable que seule l'étape d'estimation 109 de la position et/ou de la vitesse de la cible soit mise en oeuvre par une unité de localisation et de suivi d'une cible appartenant à une entité physique distincte du dispositif récepteur.

Le traitement de chaque impulsion 70 émise pendant un intervalle de temps 71 peut être effectué indépendamment, et les résultats des traitements effectués pour toutes les impulsions 70 pendant une période d'intégration sont combinés de façon cohérente pour ne pas dégrader le rapport signal sur bruit.

Supposons que les N canaux fréquentiels d'émission 73 présentent chacun une fréquence centrale égale à $f_c$ + $\Delta f(j)$, $j \in [0 ; (N - 1)]$. Le traitement Doppler impulsionnel peut être appliqué pour chaque canal fréquentiel. Chacun des canaux est actif à un instant correspondant à une période de temps $l(j)$ dans la sous-période d'intégration $0 \leq l(j) \leq 1$. Par souci de clarté, et sans perte de généralité, on suppose dans ce qui suit que toutes les impulsions 70 ont la même forme d'onde et donc la même fonction d'autocorrélation (dans une variante, les formes d'ondes des différentes impulsions 70 pourraient toutefois être différentes d'un canal fréquentiel à l'autre). La sortie du filtrage adapté d'un canal fréquentiel est donnée par :

[Math. 24]

$$m^{i,j}[k] = a_{RX}R[k - \tau_t f_s] \exp(i\frac{2\pi}{f_s}M\left(2\frac{v_t}{c}\left(f_c + \Delta f(j)\right)(i + l(j))\right))$$

$$+ \sum_{i_c=1}^{N_c} a_{C_{i_c}}R[k - \tau_{i_c}f_s] \exp(i\frac{2\pi}{f_s}M\left(2\frac{v_{t_{i_c}}}{c}\left(f_c + \Delta f(j)\right)(i + l(j))\right))$$

$$+ n'^{i,j}[k]$$

Il est envisageable de prendre en compte individuellement chacun des résultats de filtrage adapté obtenus pour les différents canaux fréquentiels pendant la période d'intégration cohérente. Le vecteur directeur Doppler est alors de taille L x N et chaque composante du vecteur peut s'écrire sous la forme :

[Math. 25]

$$s_{iN+j}(f_d) = \exp(i\frac{2\pi}{f_s}M\left(2\frac{v_t}{c}(f_c + \Delta f(j))(i + l(j))\right)) \; ; \; j \in [0 \; ; (N-1)] \; ; \; i$$

$$\in [0 \; ; (L-1)]$$

On peut observer que la périodicité du vecteur directeur Doppler est significativement augmentée, ce qui confère une grande vitesse maximale Doppler non ambiguë.

Le filtrage Doppler peut alors être mis en oeuvre en utilisant :

[Math. 26]

$$\omega = R_{cn}^{-1}s(f_d)$$

[Math. 27]

$$R_{cn} = \sigma^2 I + R_c$$

[Math. 28]

$$R_c = \left(\sum_{i=1}^{N_c} (a_{C_i}R[k - \tau_i f_s]^2) \; s(f_{d_i})s(f_{d_i})^H\right)$$

Le filtre optimal est celui pour lequel le rapport signal sur bruit plus fouillis (SNCR) est maximisé :

[Math. 29]

$$SNCR_{max} = (a_{RX}R[k - \tau_t f_s])^2 s^H(f_d)R_{cn}^{-1} \; s(f_d)$$

L'utilisation d'un grand nombre de canaux peut conduire à une augmentation importante des ressources de calcul nécessaires pour mener à bien le traitement car le nombre de coefficients dans le filtre Doppler optimal est égal au produit du nombre de canaux avec le nombre d'impulsions par canal pendant une période d'intégration cohérente.

Il est toutefois possible de réduire la charge de traitement tout en conservant les avantages en termes de rapport puissance crête sur puissance moyenne et de capacité de rejet du fouillis.

En particulier, il est envisageable de séparer les résultats de filtrage adapté en plusieurs groupes, de telle sorte que les résultats de filtrage adapté appartenant à un même groupe présentent des décalages de phase sensiblement égaux. Pour chaque groupe, il est alors possible de combiner les résultats de filtrage adapté appartenant audit groupe (par exemple les résultats peuvent être moyennés). Dans la présente invention, le filtrage Doppler est effectué sur les combinaisons cohérentes obtenues pour les différents groupes, plutôt que sur l'ensemble de tous les résultats de filtrage adapté. De telles dispositions permettent de diminuer la dimension du vecteur directeur Doppler à déterminer.

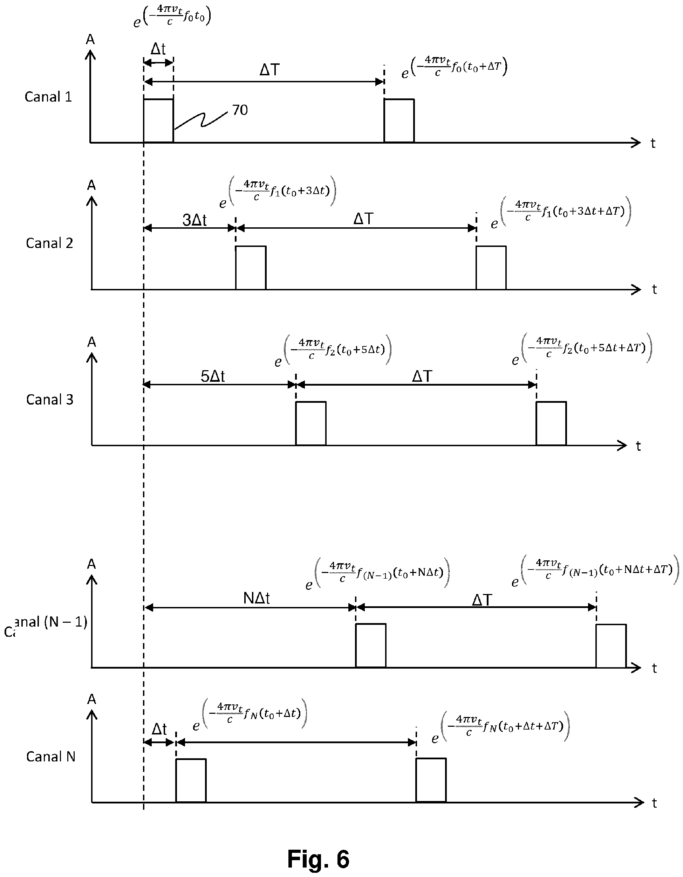

Le résultat de filtrage adapté obtenu pour un canal fréquentiel donné permet d'estimer une distance et un décalage de phase pour l'impulsion correspondante. La figure 6 illustre comment les décalages de phase observés pour les différentes impulsions 70 transmises conformément à la forme d'onde de la figure 5 dépendent du canal fréquentiel d'émission 73 et de l'intervalle de temps 71 dans lesquels chaque impulsion 70 est transmise.

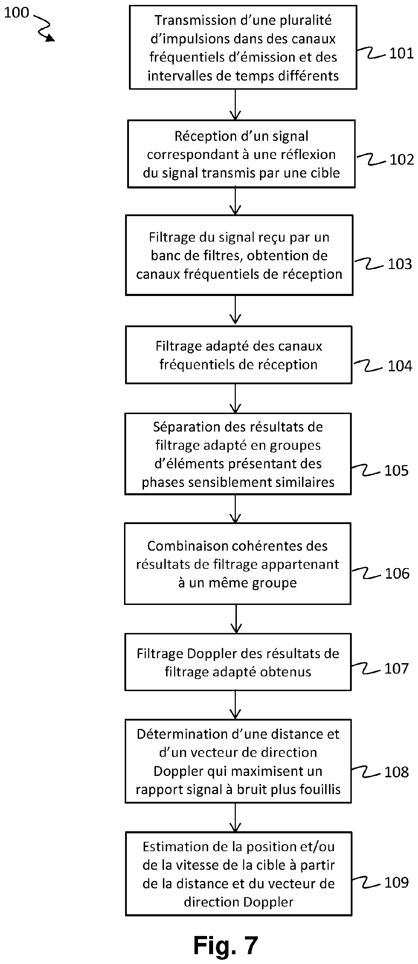

La figure 7 représente les principales étapes du procédé 100 décrit en référence à la figure 4 avec en outre une étape de séparation 105 des résultats de filtrage adapté en plusieurs groupes, de telle sorte que les résultats de filtrage adapté appartenant à un même groupe présentent des décalages de phase sensiblement égaux, et une étape de combinaison 106 cohérente des résultats de filtrage adapté de chaque groupe.

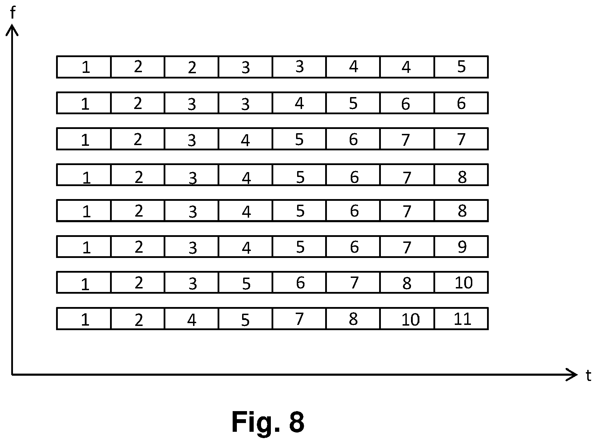

La figure 8 illustre un exemple d'agrégation des impulsions pour compenser le déphasage différentiel des différents canaux. A chaque paire (canal fréquentiel, intervalle de temps) est associé un numéro. Les résultats de filtrage pour des impulsions transmises pour des paires (canal fréquentiel, intervalle de temps) associées à un même numéro peuvent être moyennés ensemble. L'évolution de la phase pour les éléments moyennés est approximativement celle des canaux centraux. Il est envisageable de déterminer un seuil (par exemple dix degrés d'angle) en-dessous duquel des décalages de phase sont considérés comme sensiblement égaux. Il est par exemple possible d'utiliser une transformation de Keystone pour identifier les résultats de filtrage adapté qui présentent un décalage de phase similaire. Pour l'exemple considéré et illustré aux figures 5 et 8, les canaux 2 et 4 pourraient être moyennés ensemble (il pourrait y en avoir d'autres en fonction de la tolérance acceptée sur l'erreur de phase).

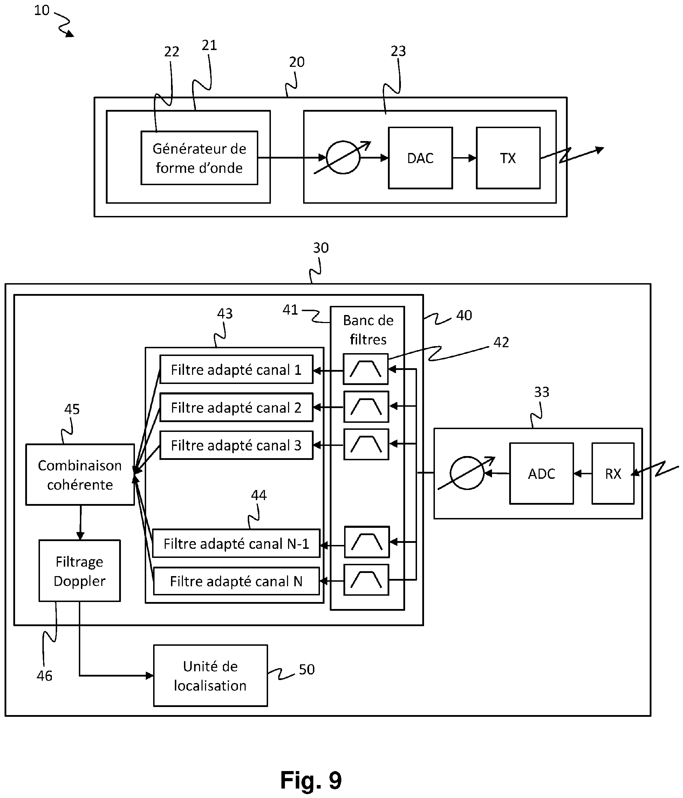

La figure 9 représente schématiquement un exemple de réalisation d'un système radar 10 selon l'invention. Le système radar 10 comporte un dispositif émetteur 20 et un dispositif récepteur 30. Lorsque le système radar 10 est bi-statique, comme c'est le cas par exemple dans le système décrit en référence à la figure 1, le dispositif émetteur 20 et le dispositif récepteur 30 sont séparés physiquement. Lorsque le système radar 10 est mono-statique, comme c'est le cas par exemple dans le système décrit en référence à la figure 2, le dispositif émetteur 20 et le dispositif récepteur 30 sont colocalisés.

Le dispositif émetteur 20 comporte une unité de traitement 21 de type DSP (acronyme anglais pour « Digital Signal Processor », en français processeur de signal numérique) et une chaîne 23 de transmission. L'unité de traitement 21 comporte un module générateur 22 configuré pour générer une forme d'onde du type de celle décrite en référence à la figure 5. La chaîne 23 de transmission comporte un convertisseur de type DAC (acronyme anglais pour « Digitial to Analog Converter ») pour convertir le signal numérique fourni par le générateur 22 en un signal analogique. La chaîne 23 de transmission comporte également un module de transmission radio pour transmettre le signal analogique généré. La chaine 23 de transmission peut comporter plusieurs antennes et un réseau de formation de faisceaux, par exemple si un traitement STAP est envisagé. Le dispositif émetteur 20 est ainsi configuré pour mettre en oeuvre l'étape de transmission 101 du procédé 100 décrit en référence aux figures 4 et 7.

Les canaux fréquentiels d'émission 73 sont choisis de manière à ce que leur contenu spectral présente un faible niveau de chevauchement les uns avec les autres. Cela peut être obtenu en filtrant la forme d'onde à l'émission, ou en générant une impulsion à bande intrinsèquement étroite, par exemple en utilisant une fenêtre d'apodisation en pré-conditionnement. Cette isolation spectrale des différents canaux fréquentiels est avantageuse car cela permet de négliger les termes d'intercorrélation par rapport à la fonction d'autocorrélation d'une impulsion transmise dans un canal fréquentiel. Il y a toutefois un compromis à faire, car cette isolation spectrale a un impact sur la largeur du support temporel du signal dans chaque canal, conformément au principe d'incertitude de Gabor-Heisenberg.

A titre d'exemple, et de façon nullement limitative, les canaux fréquentiels d'émission 73 sont par exemple compris entre 94 GHz (gigahertz) et 94,5 GHz, ou entre 9 GHz et 10 GHz. La largeur de bande d'un canal fréquentiel est par exemple comprise entre 1 MHz (mégahertz) et 100 MHz. Les fréquences centrales de deux canaux fréquentiels d'émission 73 différents sont par exemple séparées d'au moins une fois la largeur de bande, voire une fois et demi la largeur de bande. La durée d'un intervalle de temps 71 est par exemple compris entre 1 $\mu$s (microseconde) et 1 ms (milliseconde). Le nombre d'intervalles de temps 71 compris dans une période de répétition 72 est par exemple compris entre 8 et 1024. Dans un mode de réalisation particulièrement avantageux, il y a autant de canaux fréquentiels d'émission 73 que d'intervalles de temps 71 dans la période de répétition 72, et les intervalles de temps 71 recouvrent entièrement la période de répétition 72.

Le dispositif récepteur 30 comporte une chaîne 33 de réception, une unité de traitement 40 de type DSP et une unité de localisation 50.

La chaîne 33 de réception comporte un module de réception radio configuré pour recevoir un signal comportant une réflexion par une cible du signal transmis par le dispositif émetteur 20. La chaîne 33 de réception comporte un convertisseur de type ADC (acronyme anglais pour « Analog to Digital Converter ») pour convertir le signal analogique reçu en un signal numérique. La chaine 33 de réception peut elle aussi comporter plusieurs antennes et un réseau de formation de faisceaux. La chaîne 33 de réception est ainsi configurée pour mettre en oeuvre l'étape de réception 102 du procédé 100.

L'unité de traitement 40 est un processeur de type DSP configuré par des instructions de code de programme mémorisées dans un support d'enregistrement pour mettre en oeuvre certaines étapes du procédé 100.

L'unité de traitement 40 du dispositif récepteur 30 comporte un banc 41 de filtres 42 numériques. Chaque filtre 42 numérique présente une bande passante associée à l'un des canaux fréquentiels d'émission 73 et fournit en sortie un signal associé à un canal fréquentiel de réception. Le banc 41 de filtres 42 numériques est ainsi configuré pour mettre en oeuvre l'étape de filtrage 103 du procédé 100. Chaque canal fréquentiel de réception correspond à une sous-bande de fréquences similaire à celle du canal fréquentiel d'émission associé.

L'unité de traitement 40 du dispositif récepteur 30 comporte un module de filtrage adapté 43 de chaque canal fréquentiel de réception pendant une sous-période d'intégration. Le module de filtrage adapté 43 est ainsi configuré pour mettre en oeuvre l'étape de filtrage adapté 104 du procédé 100. Pour chaque canal fréquentiel de réception, le filtrage adapté produit un pic de corrélation dont la largeur est approximativement égale à la largeur du pic de corrélation de la forme d'onde d'une impulsion 70. La durée limitée des impulsions 70 a pour conséquence que les lobes secondaires de corrélation sont restreints à un cadre temporel limité autour du pic de corrélation (en supposant que les impulsions des autres canaux n'interfèrent pas de manière significative avec le canal d'intérêt).

L'unité de traitement 40 du dispositif récepteur 30 comporte également un module de combinaison 45 configuré pour séparer les résultats de filtrage adapté en plusieurs groupes, de telle sorte que les résultats de filtrage adapté appartenant à un même groupe présentent des décalages de phase sensiblement égaux, et pour chaque groupe, effectuer une combinaison cohérente des résultats de filtrage adapté appartenant audit groupe. Le module de combinaison 45 est ainsi configuré pour mettre en oeuvre les étape 105 et 106 du procédé 100 décrit en référence à la figure 7.

L'unité de traitement 40 du dispositif récepteur 30 comporte un module de filtrage Doppler 46 configuré pour effectuer un filtrage Doppler des résultats de filtrage adapté obtenus pour une période d'intégration cohérente formée de plusieurs sous-périodes d'intégration successives. Le module de filtrage Doppler 46 est également configuré pour déterminer une distance et un vecteur directeur Doppler qui maximisent le rapport signal sur bruit plus fouillis SNCR pour le signal reçu. Le module de combinaison 45 est ainsi configuré pour mettre en oeuvre l'étape 107 du procédé 100.

L'unité de localisation 50 est configurée pour estimer la position et/ou la vitesse de la cible à partir de la distance et du vecteur directeur Doppler ainsi déterminés.

Comme cela a été expliqué précédemment, dans des variantes, l'unité de localisation 50 pourrait appartenir au module de traitement 40, ou à une autre entité physique distincte du dispositif de réception 30. Selon encore une autre variante, l'unité de traitement 40 et l'unité de localisation 50 pourraient toutes les deux appartenir à une entité distincte du dispositif de réception 30.

La description ci-avant illustre clairement que, par ses différentes caractéristiques et leurs avantages, la présente invention atteint les objectifs fixés. En particulier, le système radar selon l'invention, et son procédé de fonctionnement associé, permettent d'améliorer sensiblement le rapport signal sur bruit plus fouillis (SNCR). Le faible niveau de lobes secondaires induit par le traitement parallèle des impulsions permet en effet d'augmenter le rapport cyclique sans augmenter la contamination du signal par le fouillis. Cela induit un SNCR plus élevé pour un même niveau de puissance crête, ou une puissance crête plus faible pour obtenir un même niveau de SNCR.

De manière plus générale, il est à noter que les modes de mise en oeuvre et de réalisation considérés ci-dessus ont été décrits à titre d'exemples non limitatifs, et que d'autres variantes sont par conséquent envisageables.

Il convient de noter que les canaux fréquentiels d'émission et/ou les intervalles de temps peuvent varier au cours du temps. Ainsi, dans des modes particuliers de mise en oeuvre, pour au moins un canal fréquentiel d'émission 73, ledit canal fréquentiel d'émission 73 est associé à un intervalle de temps 71 différent d'une période de répétition 72 à une autre. Dans des modes particuliers de mise en oeuvre, au moins un canal fréquentiel d'émission 73 varie d'une période d'intégration cohérente à une autre. La variation de l'ordre dans lequel les impulsions 70 sont transmises dans les différents canaux fréquentiels d'émission 73, et/ou la variation des canaux fréquentiels d'émission 73 eux-mêmes rendent le système moins prédictible et donc plus résilient au brouillage. Il est également envisageable de faire varier les durées des intervalles de temps 71 d'une période d'intégration cohérente à une autre.

Il convient de noter que l'ordre dans lequel les impulsions 70 sont transmises dans les différents canaux fréquentiels d'émission 73 pour une période de répétition 72 donnée peut être complètement indépendant de l'ordre dans lequel les impulsions 70 sont transmises dans les différents canaux fréquentiels d'émission 73 pour la période de répétition précédente ou pour la période de répétition suivante.

Dans des modes particuliers de mise en oeuvre, pour au moins un intervalle de temps 71 de donné, plusieurs impulsions 70 sont transmises dans des canaux fréquentiels d'émission 73 différents. Il peut en effet être avantageux de diversifier dans le domaine fréquentiel plusieurs impulsions émises dans un même intervalle de temps car la surface radar équivalente d'une cible peut varier avec la fréquence.

Les impulsions peuvent être modulées ou non. Le fait de moduler une impulsion permet d'obtenir un pic de corrélation plus étroit et donc une résolution plus fine pour la détection de la cible. Les différentes impulsions transmises dans une même période de répétition peuvent éventuellement présenter des modulations différentes.

Les exemples d'application présentés (système radar bi-statique pour la surveillance aérienne et système radar mono-statique pour la surveillance météorologique) ne sont pas limitatifs, et rien n'exclut de considérer d'autres applications.

**Revendications**

1. Procédé (100) de fonctionnement d'un système radar (10), ledit procédé (100) comportant :

   - une transmission (101) d'un signal comprenant, pendant une période de répétition (72), une pluralité d'impulsions (70), chaque impulsion (70) étant transmise dans un canal fréquentiel d'émission (73) différent et pendant un intervalle de temps (71) différent,

- une réception (102) d'un signal comprenant une réflexion du signal transmis par une cible (60) dont on cherche à estimer une position et/ou une vitesse, le signal reçu comprenant également du bruit et du fouillis,
- un filtrage (103) du signal reçu par un banc de filtres numériques, chaque filtre numérique présentant respectivement une bande passante associée à l'un des canaux fréquentiels d'émission (73) et fournissant en sortie un signal associé à un canal fréquentiel de réception,
- un filtrage adapté (104) du signal de chaque canal fréquentiel de réception pendant une sous-période d'intégration,
- une séparation (105) des résultats de filtrage adapté en plusieurs groupes, de telle sorte que les résultats de filtrage adapté appartenant à un même groupe présentent des décalages de phase sensiblement égaux,
- pour chaque groupe, une combinaison (106) cohérente des résultats de filtrage adapté appartenant audit groupe,
- un filtrage Doppler (107) des résultats de filtrage adapté obtenus pour les différents canaux fréquentiels de réception pour plusieurs sous-périodes d'intégration successives formant une période d'intégration cohérente recouvrant plusieurs périodes de répétition (72) successives, ledit filtrage Doppler (107) étant basé sur les combinaisons cohérentes obtenues pour les différents groupes,
- une détermination (108) d'une distance et d'un vecteur directeur Doppler qui maximisent un rapport signal sur bruit plus fouillis pour le signal reçu,
- une estimation (109) de la position et/ou de la vitesse de la cible (60) à partir de la distance et du vecteur directeur Doppler ainsi déterminés.

2. Procédé (100) selon la revendication 1 dans lequel il y a autant de canaux fréquentiels d'émission (73) que d'intervalles de temps (71) dans la période de répétition (72), et les intervalles de temps (71) recouvrent entièrement la période de répétition (72).

3. Procédé (100) selon l'une quelconque des revendications 1 à 2 dans lequel, pour au moins un canal fréquentiel d'émission (73), ledit canal fréquentiel d'émission (73) est associé à un intervalle de temps (71) différent d'une période de répétition (72) à une autre.

4. Procédé (100) selon l'une quelconque des revendications 1 à 3 dans lequel au moins un canal fréquentiel d'émission (73) varie d'une période d'intégration cohérente à une autre.

5. Procédé (100) selon l'une quelconque des revendications 1 à 4 dans lequel, pour au moins un intervalle de temps (71) donné, plusieurs impulsions (70) sont transmises dans des canaux fréquentiels d'émission (73) différents.

6. Procédé (100) selon l'une quelconque des revendications 1 à 5 dans lequel les canaux fréquentiels d'émission (73) sont compris entre 94 GHz et 94,5 GHz, ou entre 9 GHz et 10 GHz.

7. Procédé (100) selon l'une quelconque des revendications 1 à 6 dans lequel la largeur de bande d'un canal fréquentiel est comprise entre 1 MHz et 100 MHz et les fréquences centrales de deux canaux fréquentiels d'émission (73) différents sont séparées d'au moins une fois la largeur de bande.

8. Procédé (100) selon l'une quelconque des revendications 1 à 7 dans lequel la durée d'un intervalle de temps (71) est compris entre 1 $\mu$s et 1 ms.

9. Procédé (100) selon la revendication 8 dans lequel le nombre d'intervalles de temps (71) compris dans une période de répétition (72) est compris entre 8 et 1024.

10. Système radar (10) comprenant :

- un dispositif émetteur (20) configuré pour transmettre un signal comprenant, pendant une période de répétition (72), une pluralité d'impulsions (70), chaque impulsion (70) étant transmise dans un canal fréquentiel d'émission (73) différent et pendant un intervalle de temps (71) différent,
- un dispositif récepteur (30) configuré pour recevoir un signal comprenant une réflexion du signal transmis par une cible (60) dont on cherche à estimer une position et/ou une vitesse, le signal reçu comprenant également du bruit et du fouillis,
- une unité de traitement (40) comprenant :

  ◦ un banc (41) de filtres numériques (42) configuré pour effectuer un filtrage du signal reçu, chaque filtre numérique (42) présentant respectivement une bande passante associée à l'un des canaux fréquentiels d'émission (73) et fournissant en sortie un signal associé à un canal fréquentiel de réception,

◦ un module de filtrage adapté (43) configuré pour effectuer un filtrage adapté du signal de chaque canal fréquentiel de réception pendant une sous-période d'intégration,

◦ un module de combinaison (45) configuré pour séparer les résultats de filtrage adapté en plusieurs groupes, de telle sorte que les résultats de filtrage adapté appartenant à un même groupe présentent des décalages de phase sensiblement égaux et, pour chaque groupe, effectuer une combinaison cohérente des résultats de filtrage adapté appartenant audit groupe,

◦ un module de filtrage Doppler (46) configuré pour effectuer un filtrage Doppler des résultats de filtrage adapté obtenus pour les différents canaux fréquentiels de réception pour plusieurs sous-périodes d'intégration successives formant une période d'intégration cohérente recouvrant plusieurs périodes de répétition (72) successives, le filtrage Doppler étant basé sur les combinaisons obtenues en sortie du module de combinaison (45), et pour déterminer une distance et un vecteur directeur Doppler qui maximisent un rapport signal sur bruit plus fouillis pour le signal reçu,

- une unité de localisation (50) configuré pour estimer la position et/ou la vitesse de la cible (60) à partir de la distance et du vecteur directeur Doppler ainsi déterminés.

11. Système radar (10) selon la revendication 10 dans lequel il y a autant de canaux fréquentiels d'émission (73) que d'intervalles de temps (71) dans la période de répétition (72), et les intervalles de temps (71) recouvrent entièrement la période de répétition (72).

12. Système radar (10) selon l'une quelconque des revendications 10 à 11 dans lequel le système radar (10) est bi-statique, le dispositif émetteur (20) et le dispositif récepteur (30) étant séparés l'un de l'autre.

13. Système radar (10) selon la revendication 12 dans lequel le dispositif émetteur (20) est destiné à être embarqué dans un satellite (25) en orbite autour de la Terre (90), ledit système radar (10) étant destiné à la surveillance aérienne.

14. Système radar (10) selon l'une quelconque des revendications 10 à 11 dans lequel le système radar (10) est un système radar mono-statique destiné à être embarqué dans un satellite (25) en orbite autour de la Terre (90), ledit système radar (10) étant destiné à la surveillance météorologique.

15. Unité de traitement (40) d'un système radar (10) pour traiter un signal reçu par un dispositif récepteur (30) dudit système radar (10), ledit signal reçu comprenant une réflexion d'un signal transmis par un dispositif émetteur (20) dudit système radar (10), ledit signal transmis comprenant, pendant une période de répétition (72), une pluralité d'impulsions (70), chaque impulsion (70) étant transmise dans un canal fréquentiel d'émission (73) différent et pendant un intervalle de temps (71) différent, ledit signal reçu comprenant également du bruit et du fouillis, ladite unité de traitement (40) comprenant :

- un banc (41) de filtres numériques (42) configuré pour filtrer le signal reçu, chaque filtre numérique (42) présentant respectivement une bande passante associée à l'un des canaux fréquentiels d'émission (73) et fournissant en sortie un signal associé à un canal fréquentiel de réception,

- un module de filtrage adapté (43) configuré pour effectuer un filtrage adapté du signal de chaque canal fréquentiel de réception pendant une sous-période d'intégration,

- un module de combinaison (45) configuré pour séparer les résultats de filtrage adapté en plusieurs groupes, de telle sorte que les résultats de filtrage adapté appartenant à un même groupe présentent des décalages de phase sensiblement égaux et, pour chaque groupe, effectuer une combinaison cohérente des résultats de filtrage adapté appartenant audit groupe,

- un module de filtrage Doppler (46) configuré pour effectuer un filtrage Doppler des résultats de filtrage adapté obtenus pour les différents canaux fréquentiels de réception pour plusieurs sous-périodes d'intégration successives formant une période d'intégration cohérente recouvrant plusieurs périodes de répétition (72) successives, le filtrage Doppler étant basé sur les combinaisons obtenues en sortie du module de combinaison (45), et pour déterminer une distance et un vecteur directeur Doppler qui maximisent un rapport signal sur bruit plus fouillis pour le signal reçu.

16. Support d'enregistrement lisible par ordinateur comprenant des instructions destinées à être exécutées par une unité de traitement (40) d'un système radar (10) pour traiter un signal reçu par un dispositif récepteur (30) dudit système radar (10), ledit signal reçu comprenant une réflexion d'un signal transmis par un dispositif émetteur (20)

**EP 4 330 722 B1**

dudit système radar (10), ledit signal transmis comprenant, pendant une période de répétition (72), une pluralité d'impulsions (70), chaque impulsion (70) étant transmise dans un canal fréquentiel d'émission (73) différent et pendant un intervalle de temps (71) différent, ledit signal reçu comprenant également du bruit et du fouillis, lesdites instructions conduisant ladite unité de traitement (40) à :

- filtrer le signal reçu par un ensemble de filtres numériques (42), chaque filtre numérique (42) présentant respectivement une bande passante associée à l'un des canaux fréquentiels d'émission (73) et fournissant en sortie un signal associé à un canal fréquentiel de réception,
- effectuer un filtrage adapté du signal de chaque canal fréquentiel de réception pendant une sous-période d'intégration,
- séparer les résultats de filtrage adapté en plusieurs groupes, de telle sorte que les résultats de filtrage adapté appartenant à un même groupe présentent des décalages de phase sensiblement égaux,
- pour chaque groupe, combiner de façon cohérente les résultats de filtrage adapté appartenant audit groupe,
- effectuer un filtrage Doppler des résultats de filtrage adapté obtenus pour les différents canaux fréquentiels de réception pour plusieurs sous-périodes d'intégration successives formant une période d'intégration cohérente recouvrant plusieurs périodes de répétition (72) successives, le filtrage Doppler étant basé sur les combinaisons obtenues,
- déterminer une distance et un vecteur directeur Doppler qui maximisent un rapport signal sur bruit plus fouillis pour le signal reçu.

**Patentansprüche**

1. Verfahren (100) zum Betreiben eines Radarsystems (10), wobei das Verfahren (100) enthält:

- eine Übertragung (101) eines Signals, das, während einer Wiederholungsperiode (72), eine Vielzahl von Impulsen (70) umfasst, wobei jeder Impuls (70) in einem anderen Sendefrequenzkanal (73) und während eines anderen Zeitintervalls (71) übertragen wird,
- einen Empfang (102) eines Signals, das eine Reflexion des gesendeten Signals von einem Ziel (60) umfasst, von dem eine Position und/oder eine Geschwindigkeit geschätzt werden soll, wobei das empfangene Signal auch Rauschen und Clutter umfasst,
- eine Filterung (103) des empfangenen Signals durch eine Bank von digitalen Filtern, wobei jedes digitale Filter jeweils eine Bandbreite aufweist, die einem der Sendefrequenzkanäle (73) zugeordnet ist, und als Ausgang ein Signal bereitstellt, das einem Empfangsfrequenzkanal zugeordnet ist,
- eine angepasste Filterung (104) des Signals jedes Empfangsfrequenzkanals während einer Integrations-Teilperiode,
- eine Aufteilung (105) der Ergebnisse der angepassten Filterung in mehrere Gruppen, so dass die Ergebnisse der angepassten Filterung, die zu einer selben Gruppe gehören, im Wesentlichen gleiche Phasenverschiebungen aufweisen,
- für jede Gruppe, eine kohärente Kombination (106) der Ergebnisse der angepassten Filterung, die zur Gruppe gehören,
- eine Doppler-Filterung (107) der Ergebnisse der angepassten Filterung, die für die verschiedenen Empfangsfrequenzkanäle für mehrere aufeinanderfolgende Integrations-Teilperioden erhalten wurden, die eine kohärente Integrationsperiode bilden, die mehrere aufeinanderfolgende Wiederholungsperioden (72) abdeckt, wobei die Doppler-Filterung (107) auf den kohärenten Kombinationen basiert, die für die verschiedenen Gruppen erhalten wurden,
- eine Bestimmung (108) eines Abstands und eines Doppler-Richtungsvektors, die ein Signal-Rausch-Verhältnis plus Clutter für das empfangene Signal maximieren,
- eine Schätzung (109) der Position und/oder der Geschwindigkeit des Ziels (60) ausgehend vom Abstand und dem Doppler-Richtungsvektor, die so ermittelt wurden.

2. Verfahren (100) nach Anspruch 1, wobei in der Wiederholungsperiode (72) so viele Sendefrequenzkanäle (73) wie Zeitintervalle (71) vorhanden sind, und die Zeitintervalle (71) die Wiederholungsperiode (72) vollständig abdecken.

3. Verfahren (100) nach einem der Ansprüche 1 bis 2, wobei, für mindestens einen Sendefrequenzkanal (73), der Sendefrequenzkanal (73) einem Zeitintervall (71) zugeordnet ist, das sich von einer Wiederholungsperiode (72) zu einer anderen unterscheidet.

**18**

**4.** Verfahren (100) nach einem der Ansprüche 1 bis 3, wobei mindestens ein Sendefrequenzkanal (73) von einer kohärenten Integrationsperiode zu einer anderen variiert.

**5.** Verfahren (100) nach einem der Ansprüche 1 bis 4, wobei, für mindestens ein gegebenes Zeitintervall (71), mehrere Impulse (70) in verschiedenen Sendefrequenzkanälen (73) übertragen werden.

**6.** Verfahren (100) nach einem der Ansprüche 1 bis 5, wobei die Sendefrequenzkanäle (73) zwischen 94 GHz und 94,5 GHz liegen oder zwischen 9 GHz und 10 GHz.

**7.** Verfahren (100) nach einem der Ansprüche 1 bis 6, wobei die Bandbreite eines Frequenzkanals zwischen 1 MHz und 100 MHz liegt, und die Mittenfrequenzen von zwei verschiedenen Sendefrequenzkanälen (73) um mindestens einmal die Bandbreite voneinander getrennt sind.

**8.** Verfahren (100) nach einem der Ansprüche 1 bis 7, wobei die Dauer eines Zeitintervalls (71) zwischen 1 $\mu$s und 1 ms liegt.

**9.** Verfahren (100) nach Anspruch 8, wobei die Anzahl der Zeitintervalle (71) innerhalb einer Wiederholungsperiode (72) zwischen 8 und 1024 liegt.

**10.** Radarsystem (10) umfassend:

- eine Emittiervorrichtung (20), die zum Übertragen eines Signals konfiguriert ist, das, während einer Wiederholungsperiode (72), eine Vielzahl von Impulsen (70) umfasst, wobei jeder Impuls (70) in einem anderen Sendefrequenzkanal (73) und während eines anderen Zeitintervalls (71) übertragen wird,
- eine Empfangsvorrichtung (30), die zum Empfangen eines Signals konfiguriert ist, das eine Reflexion des gesendeten Signals von einem Ziel (60) umfasst, von dem eine Position und/oder eine Geschwindigkeit geschätzt werden soll, wobei das empfangene Signal auch Rauschen und Clutter umfasst,
- eine Verarbeitungseinheit (40), umfassend:

  ○ eine Bank (41) von digitalen Filtern (42), die konfiguriert ist, um eine Filterung des empfangenen Signals durchzuführen, wobei jedes digitale Filter (42) jeweils eine Bandbreite aufweist, die einem der Sendefrequenzkanäle (73) zugeordnet ist, und als Ausgang ein Signal bereitstellt, das einem Empfangsfrequenzkanal zugeordnet ist,
  ○ ein Modul der angepassten Filterung (43), das konfiguriert ist, um eine angepasste Filterung des Signals jedes Empfangsfrequenzkanals während einer Integrations-Teilperiode durchzuführen,
  ○ ein Kombinationsmodul (45), das konfiguriert ist, um die Ergebnisse der angepassten Filterung in mehrere Gruppen aufzuteilen, so dass die Ergebnisse der angepassten Filterung, die zu einer selben Gruppe gehören, im Wesentlichen gleiche Phasenverschiebungen aufweisen, und, für jede Gruppe, eine kohärente Kombination der Ergebnisse der angepassten Filterung durchzuführen, die zu dieser Gruppe gehören,
  ○ ein Modul der Doppler-Filterung (46), das konfiguriert ist, um eine Doppler-Filterung der Ergebnisse der angepassten Filterung durchzuführen, die für die verschiedenen Empfangsfrequenzkanäle für mehrere aufeinanderfolgende Integrations-Teilperioden erhalten wurden, die eine kohärente Integrationsperiode bilden, die mehrere aufeinanderfolgende Wiederholungsperioden (72) abdeckt, wobei die Doppler-Filterung auf den am Ausgang des Kombinationsmoduls (45) erhaltenen Kombinationen basiert, und um einen Abstand und einen Doppler-Richtungsvektor zu bestimmen, die ein Signal-Rausch-Verhältnis plus Clutter für das empfangene Signal maximieren,

- eine Lokalisierungseinheit (50), die konfiguriert ist, um die Position und/oder die Geschwindigkeit des Ziels (60) zu schätzen, ausgehend vom Abstand und dem Doppler-Richtungsvektor, die so ermittelt wurden.

**11.** Radarsystem (10) nach Anspruch 10, wobei in der Wiederholungsperiode (72) so viele Sendefrequenzkanäle (73) wie Zeitintervalle (71) vorhanden sind, und die Zeitintervalle (71) die Wiederholungsperiode (72) vollständig abdecken.

**12.** Radarsystem (10) nach einem der Ansprüche 10 bis 11, wobei das Radarsystem (10) bistatisch ist, wobei die Emittiervorrichtung (20) und die Empfangsvorrichtung (30) voneinander getrennt sind.

**13.** Radarsystem (10) nach Anspruch 12, wobei die Emittiervorrichtung (20) dazu bestimmt ist, in einen Satelliten (25) in einer Erdumlaufbahn (90) eingebaut zu werden, wobei das Radarsystem (10) zur Luftüberwachung bestimmt ist.

14. Radarsystem (10) nach einem der Ansprüche 10 bis 11, wobei das Radarsystem (10) ein monostatisches Radarsystem ist, das dazu bestimmt ist, in einen Satelliten (25) in einer Erdumlaufbahn (90) eingebaut zu werden, wobei das Radarsystem (10) zur Wetterüberwachung bestimmt ist.

15. Verarbeitungseinheit (40) eines Radarsystems (10) zur Verarbeitung eines von einer Empfangsvorrichtung (30) des Radarsystems (10) empfangenen Signals, wobei das empfangene Signal eine Reflexion eines Signals umfasst, das von einer Emittiervorrichtung (20) des Radarsystems (10) übertragen wurde, wobei das übertragene Signal, während einer Wiederholungsperiode (72), eine Vielzahl von Impulsen (70) umfasst, wobei jeder Impuls (70) in einem anderen Sendefrequenzkanal (73) und während eines anderen Zeitintervalls (71) übertragen wird, wobei das empfangene Signal auch Rauschen und Clutter umfasst, wobei die Verarbeitungseinheit (40) umfasst:

- eine Bank (41) von digitalen Filtern (42), die konfiguriert ist, um das empfangene Signal zu filtern, wobei jedes digitale Filter (42) jeweils eine Bandbreite aufweist, die einem der Sendefrequenzkanäle (73) zugeordnet ist, und als Ausgang ein Signal bereitstellt, das einem Empfangsfrequenzkanal zugeordnet ist,
- ein Modul der angepassten Filterung (43), das konfiguriert ist, um eine angepasste Filterung des Signals jedes Empfangsfrequenzkanals während einer Integrations-Teilperiode durchzuführen,
- ein Kombinationsmodul (45), das konfiguriert ist, um die Ergebnisse der angepassten Filterung in mehrere Gruppen aufzuteilen, so dass die Ergebnisse der angepassten Filterung, die zu einer selben Gruppe gehören, im Wesentlichen gleiche Phasenverschiebungen aufweisen, und, für jede Gruppe, eine kohärente Kombination der Ergebnisse der angepassten Filterung durchzuführen, die zu dieser Gruppe gehören,
- ein Modul der Doppler-Filterung (46), das konfiguriert ist, um eine Doppler-Filterung der Ergebnisse der angepassten Filterung durchzuführen, die für die verschiedenen Empfangsfrequenzkanäle für mehrere aufeinanderfolgende Integrations-Teilperioden erhalten wurden, die eine kohärente Integrationsperiode bilden, die mehrere aufeinanderfolgende Wiederholungsperioden (72) abdeckt, wobei die Doppler-Filterung auf den am Ausgang des Kombinationsmoduls (45) erhaltenen Kombinationen basiert, und um einen Abstand und einen Doppler-Richtungsvektor zu bestimmen, die ein Signal-Rausch-Verhältnis plus Clutter für das empfangene Signal maximieren.

16. Computerlesbares Aufzeichnungsmedium, Anweisungen umfassend, die dazu bestimmt sind, durch eine Verarbeitungseinheit (40) eines Radarsystems (10) ausgeführt zu werden, um ein Signal zu verarbeiten, das von einer Empfangsvorrichtung (30) des Radarsystems (10) empfangen wurde, wobei das empfangene Signal eine Reflexion eines Signals umfasst, das von einer Emittiervorrichtung (20) des Radarsystems (10) übertragen wurde, wobei das übertragene Signal, während einer Wiederholungsperiode (72), eine Vielzahl von Impulsen (70) umfasst, wobei jeder Impuls (70) in einem anderen Sendefrequenzkanal (73) und während eines anderen Zeitintervalls (71) übertragen wird, wobei das empfangene Signal auch Rauschen und Clutter umfasst, wobei die Anweisungen die Verarbeitungseinheit (40) veranlassen zum:

- Filtern des empfangenen Signals durch eine Reihe von digitalen Filtern (42), wobei jedes digitale Filter (42) jeweils eine Bandbreite aufweist, die einem der Sendefrequenzkanäle (73) zugeordnet ist, und als Ausgang ein Signal bereitstellt, das einem Empfangsfrequenzkanal zugeordnet ist,
- Durchführen einer angepassten Filterung des Signals jedes Empfangsfrequenzkanals während einer Integrations-Teilperiode,
- Aufteilen der Ergebnisse der angepassten Filterung in mehrere Gruppen, so dass die Ergebnisse der angepassten Filterung, die zu einer selben Gruppe gehören, im Wesentlichen gleiche Phasenverschiebungen aufweisen,
- für jede Gruppe, Kombinieren, auf kohärente Weise, der Ergebnisse der angepassten Filterung, die zur Gruppe gehören,
- Durchführen einer Doppler-Filterung der Ergebnisse der angepassten Filterung, die für die verschiedenen Empfangsfrequenzkanäle für mehrere aufeinanderfolgende Integrations-Teilperioden erhalten wurden, die eine kohärente Integrationsperiode bilden, die mehrere aufeinanderfolgende Wiederholungsperioden (72) abdeckt, wobei die Doppler-Filterung auf den erhaltenen Kombinationen basiert,
- Bestimmen eines Abstands und eines Doppler-Richtungsvektors, die ein Signal-Rausch-Verhältnis plus Clutter für das empfangene Signal maximieren.

**Claims**

1. Method (100) for operating a radar system (10), said method (100) including:

   - a transmission (101) of a signal comprising, during a repetition period (72), a plurality of pulses (70), each pulse (70) being transmitted in a different transmission frequency channel (73) and during a different time interval (71),
   - a reception (102) of a signal comprising a reflection of the transmitted signal by a target (60) a position and/or a speed of which it is sought to estimate, the received signal also comprising noise and clutter,
   - a filtering (103) of the received signal by a bank of digital filters, each digital filter having respectively a passband associated with one of the transmission frequency channels (73) and supplying as an output a signal associated with a reception frequency channel,
   - an adapted filtering (104) of the signal of each reception frequency channel during an integration sub-period,
   - a separation (105) of the adapted-filtering results into several groups, so that the adapted-filtering results belonging to one and the same group have substantially equal phase shifts,
   - for each group, a coherent combination (106) of the adapted-filtering results belonging to said group,
   - a Doppler filtering (107) of the adapted-filtering results obtained for the various reception frequency channels for several successive integration sub-periods forming a coherent integration period overlapping several successive repetition periods (72), said Doppler filtering (107) being based on the coherent combinations obtained for the various groups,
   - a determination (108) of a distance and of a Doppler directing vector that maximise a signal-to-noise-plus-clutter ratio for the received signal,
   - an estimation (109) of the position and/or of the speed of the target (60) from the distance and from the Doppler directing vector thus determined.

2. Method (100) according to claim 1 wherein there are as many transmission frequency channels (73) as there are time intervals (71) in the repetition period (72), and the time intervals (71) fully overlap the repetition period (72) .

3. Method (100) according to either one of claims 1 to 2 wherein, for at least one transmission frequency channel (73), said transmission frequency channel (73) is associated with a different time interval (71) from one repetition period (72) to another.

4. Method (100) according to any one of claims 1 to 3 wherein at least one transmission frequency channel (73) varies from one coherent integration period to another.

5. Method (100) according to any one of claims 1 to 4 wherein, for at least one given time interval (71), several pulses (70) are transmitted in different transmission frequency channels (73).

6. Method (100) according to any one of claims 1 to 5 wherein the transmission frequency channels (73) lie between 94 GHz and 94.5 GHz, or between 9 GHz and 10 GHz.

7. Method (100) according to any one of claims 1 to 6 wherein the bandwidth of a frequency channel is between 1 MHz and 100 MHz, and the centre frequencies of two different transmission frequency channels (73) are separated by at least once the bandwidth.

8. Method (100) according to any one of claims 1 to 7 wherein the duration of a time interval (71) is between 1 $\mu$s and 1 ms.

9. Method (100) according to claim 8 wherein the number of time intervals (71) included in a repetition period (72) is between 8 and 1024.

10. Radar system (10) comprising:

    - a transmitting device (20) configured to transmit a signal comprising, during a repetition period (72), a plurality of pulses (70), each pulse (70) being transmitted in a different transmission frequency channel (73) and during a different time interval (71),
    - a receiving device (30) configured to receive a signal comprising a reflection of the transmitted signal by a target (60) a position and/or a speed of which it is sought to estimate, the received signal also comprising noise and clutter,

- a processing unit (40) comprising:

o a bank (41) of digital filters (42) configured to filter the received signal, each digital filter (42) having respectively a passband associated with one of the transmission frequency channels (73) and supplying as an output a signal associated with a reception frequency channel,
o an adapted-filtering module (43) configured to implement an adapted filtering of the signal of each reception frequency channel during an integration sub-period,
o a combination module (45) configured to separate the adapted-filtering results into several groups, so that the adapted-filtering results belonging to one and the same group have substantially equal phase shifts, and, for each group, to implement a coherent combination of the adapted-filtering results belonging to said group,
o a Doppler-filtering module (46) configured to implement a Doppler filtering of the adapted-filtering results obtained for the various reception frequency channels for several successive integration sub-periods forming a coherent integration period overlapping several successive repetition periods (72), the Doppler filtering being based on the combinations obtained at the output of the combination module (45), and to determine a distance and a Doppler directing vector that maximise a signal-to-noise-plus-clutter ratio for the received signal,

- a location unit (50) configured to estimate the position and/or the speed of the target (60) from the distance and Doppler directing vector thus determined.

11. Radar system (10) according to claim 10 wherein there are as many transmission frequency channels (73) as there are time intervals (71) in the repetition period (72), and the time intervals (71) fully overlap the repetition period (72) .

12. Radar system (10) according to either one of claims 10 to 11 wherein the radar system (10) is bi-static, the transmitting device (20) and the receiving device (30) being separated from each other.

13. Radar system (10) according to claim 12 wherein the transmitting device (20) is intended to be installed in a satellite (25) in orbit around the Earth (90), said radar system (10) being intended for air surveillance.

14. Radar system (10) according to either one of claims 10 to 11 wherein the radar system (10) is a mono-static radar system intended to be installed in a satellite (25) in orbit around the Earth (90), said radar system (10) being intended for meteorological monitoring.

15. Processing unit (40) of a radar system (10) for processing a signal received by a receiving device (30) of said radar system (10), said received signal comprising a reflection of a signal transmitted by a transmitting device (20) of said radar system (10), said transmitted signal comprising, during a repetition period (72), a plurality of pulses (70), each pulse (70) being transmitted in a different transmission frequency channel (73) and during a different time interval (71), said received signal also comprising noise and clutter, said processing unit (40) comprising:

- a bank (41) of digital filters (42) configured to filter the received signal, each digital filter (42) having respectively a passband associated with one of the transmission frequency channels (73) and supplying as an output a signal associated with a reception frequency channel,
- an adapted-filtering module (43) configured to implement an adapted filtering of the signal of each reception frequency channel during an integration sub-period,
- a combination module (45) configured to separate the adapted-filtering results into several groups, so that the adapted-filtering results belonging to one and the same group have substantially equal phase shifts, and, for each group, to implement a coherent combination of the adapted-filtering results belonging to said group,
- a Doppler-filtering module (46) configured to implement a Doppler filtering of the adapted-filtering results obtained for the various reception frequency channels for several successive integration sub-periods forming a coherent integration period overlapping several successive repetition periods (72), the Doppler filtering being based on the combinations obtained at the output of the combination module (45), and to determine a distance and a Doppler directing vector that maximise a signal-to-noise-plus-clutter ratio for the received signal.

16. Computer-readable storage medium comprising instructions intended to be implemented by a processing unit (40) of a radar system (10) for processing a signal received by a receiving device (30) of said radar system (10), said received signal comprising a reflection of a signal transmitted by a transmitting device (20) of said radar system (10), said transmitted signal comprising, during a repetition period (72), a plurality of pulses (70), each pulse (70) being transmitted in a different transmission frequency channel (73) and during a different time interval (71), said received signal also comprising noise and clutter, said instructions leading said processing unit (40) to:

- filter the received signal by a set of digital filters (42), each digital filter (42) having respectively a passband associated with one of the transmission frequency channels (73) and supplying as an output a signal associated with a reception frequency channel,
- implement an adapted filtering of the signal of each reception frequency channel during an integration sub-period,
- separate the adapted-filtering results into several groups, so that the adapted-filtering results belonging to one and the same group have substantially equal phase shifts,
- for each group, coherently combine the adapted-filtering results belonging to said group,
- implement a Doppler filtering of the adapted-filtering results obtained for the various reception frequency channels for several successive integration sub-periods forming a coherent integration period overlapping several successive repetition periods (72), the Doppler filtering being based on the coherent combinations obtained,
- determine a distance and a Doppler directing vector that maximise a signal-to-noise-plus-clutter ratio for the received signal.

**Fig. 1**

**Fig. 2**

**Fig. 3**

100

Transmission d'une pluralité
d'impulsions dans des canaux
fréquentiels d'émission et des
intervalles de temps différents — 101

Réception d'un signal
correspondant à une réflexion
du signal transmis par une cible — 102

Filtrage du signal reçu par un
banc de filtres, obtention de
canaux fréquentiels de réception — 103

Filtrage adapté des canaux
fréquentiels de réception — 104

Filtrage Doppler des résultats de
filtrage adapté obtenus — 107

Détermination d'une distance et
d'un vecteur de direction
Doppler qui maximisent un
rapport signal à bruit plus fouillis — 108

Estimation de la position et/ou
de la vitesse de la cible à partir
de la distance et du vecteur de
direction Doppler — 109

**Fig. 4**

Fig. 5

**Fig. 6**

100

Transmission d'une pluralité d'impulsions dans des canaux fréquentiels d'émission et des intervalles de temps différents — 101

Réception d'un signal correspondant à une réflexion du signal transmis par une cible — 102

Filtrage du signal reçu par un banc de filtres, obtention de canaux fréquentiels de réception — 103

Filtrage adapté des canaux fréquentiels de réception — 104

Séparation des résultats de filtrage adapté en groupes d'éléments présentant des phases sensiblement similaires — 105

Combinaison cohérentes des résultats de filtrage appartenant à un même groupe — 106

Filtrage Doppler des résultats de filtrage adapté obtenus — 107

Détermination d'une distance et d'un vecteur de direction Doppler qui maximisent un rapport signal à bruit plus fouillis — 108

Estimation de la position et/ou de la vitesse de la cible à partir de la distance et du vecteur de direction Doppler — 109

**Fig. 7**

Fig. 8

Fig. 9

**RÉFÉRENCES CITÉES DANS LA DESCRIPTION**

**Documents brevets cités dans la description**

- FR 3026194 A1
- FR 3113951
- US 2012249364 A1